# EUROPÄISCHE PATENTSCHRIFT

(11) **EP 3 431 172 B1**
(45) Veröffentlichungstag und Bekanntmachung des Hinweises auf die Patenterteilung: **20.11.2024**
(21) Anmeldenummer: 18181278.5
(22) Anmeldetag: 02.07.2018
(51) Int. Cl.: B28B 1/00, B28B 3/20, B28C 5/12, B28C 5/16, E04F 21/12, B33Y 30/00, E04G 21/04, C04B 28/04, B05B 7/04, B05B 7/08, B05B 7/14, B05B 15/25, B28B 23/02, B29C 64/106, B29C 64/209, B33Y 10/00, B01F 27/191

(54) **DÜSE FÜR BETON, MÖRTEL OD. DGL. SOWIE DEREN VERWENDUNG**
NOZZLE FOR CONCRETE, MORTAR OR SIMILAR AND ITS USE
BUSE POUR BÉTON, MORTIER OU ANALOGUE AINSI QUE SON UTILISATION

(30) Priorität: 30.06.2017 AT 505382017
(43) Veröffentlichungstag der Anmeldung: 23.01.2019
(73) Patentinhaber: Baumit Beteiligungen GmbH, 2754 Waldegg (AT)
(72) Erfinder: Karaivanov, Alexander, 1160 Wien (AT); Balog, Oliver, 2560 Grillenberg (AT); Weißmann, Peter, 2754 Waldegg (AT); Steinbrecher, Bernd, 2754 Waldegg (AT); Materna, Helmut, 2700 Wiener Neustadt (AT)
(74) Vertreter: Müllner, Martin

(56) Entgegenhaltungen:
- CN-A- 105 563 609
- CN-U- 204 354 263
- CN-U- 206 264 358
- DE-U1- 20 215 662
- JP-A- H04 269 299
- US-A- 4 708 745
- US-A- 5 656 230
- US-A1- 2012 038 074

## Beschreibung

Die vorliegende Erfindung betrifft ein 3D-Druckersystem zum Ausbringen von Beton, Mörtel oder dergleichen, mit einer Düse, mit einer Hauptöffnung für die Zufuhr des Betons, des Mörtels oder dergleichen, mit mindestens einer Zusatzöffnung für die Zufuhr mindestens eines Zusatzstoffes sowie mit einer Austragsöffnung zum Ausbringen des mit dem Zusatzstoff versetzten Betons, Mörtels oder dergleichen.

Zum Aufbringen von Beton sind verschiedene Techniken bekannt. Eine häufig verwendete Möglichkeit ist, den Beton in Betonkübel zu gießen, diese mit einem Kran über die zu betonierende Fläche (die üblicherweise durch eine Schalung begrenzt ist) zu heben und dann den Betonkübel unten zu öffnen, sodass der Beton ausfließt.

Insbesondere im Tunnelbau kommt oft Spritzbeton zum Einsatz. Beim Nassspritzverfahren werden Zement, Zuschlagstoffe und Wasser zusammengemischt und mittels einer Mörtelpumpe zu einer Spritzdüse befördert, welche die Mischung mittels gesondert zugeführter Druckluft zerstäubt und zum Auftrag beschleunigt. An der Düse wird Beschleuniger dem Spritzbeton zugegeben, der sich infolge der Druckluft mit dem Spritzbeton teils in der Düse, teils während des Fluges zur Auftreffstelle und dort selbst durch die mechanische Wirkung des Auftreffens (auch des nachfolgenden Betons) mit dem Beton vermischt.

Eine weitere Möglichkeit sind sogenannte (Auto-)Betonpumpen. Bei diesen Systemen wird der Beton vom Betonmischer durch eine bis zu etwa 120 m lange Schlauchleitung direkt zur Verwendungsstelle gepumpt, wobei das offene Ende des Schlauchs über der zu betonierenden Fläche positioniert wird.

Meist wird der fertig gemischte Beton durch die Schlauchleitung gepumpt und unverändert an der Verwendungsstelle abgegeben. Aus DE 20215662 U1 und JP H04269299 A ist jedoch auch schon bekannt, dass zum Ausbringen von schnell abbindendem Beton in eine Schalung am Ende einer Leitung direkt vor der Schalung ein Mischer vorgesehen ist, der zum Vermischen von Beschleuniger und flüssigem Beton ausgelegt ist. Zu diesem Zweck weist der Mischer getrennte Einlässe für Beton und für Beschleuniger auf sowie ein aktiv angetriebenes Rührwerk.

Gemäß dieser Schrift ist an Auskleidungen im Tunnelbau gedacht. Der Beton wird von unten in die Schalung, die an der entsprechenden Stelle ein Loch hat, eingebracht. Das Mischwerk liegt horizontal unter der Schalung. Der Beton wird dem Mischwerk von unten zugeführt, sodass er im Mischwerk um 90° abgelenkt wird. Nach dem Durchlaufen des Mischwerks wird der Beton ein zweites Mal um 90° abgelenkt, damit er senkrecht von unten in die Schalung gelangen kann. Der Winkel zwischen der Längsachse des Mischwerks und der Austragsrichtung der Düse beträgt somit 90°. Das Rohr des Mischwerks kann (siehe Seite 6 dieser Schrift, Z 9-11) eine Länge zwischen 30 und 100 cm sowie einen Durchmesser zwischen 10 und 30 cm haben. Diese Düse ist darauf ausgelegt, große Mengen von Beton, der noch flüssig ist, in die Schalung einzubringen.

Schließlich findet in der jüngeren Vergangenheit auch der 3D-Druck für Beton und Mörtel zunehmend Interesse. Die meisten Verfahren, die man als marktreif bezeichnen kann, arbeiten nach dem Prinzip des "Pulverdruckes": man bringt eine Schicht von pulverförmigem, trockenem Beton, Mörtel oder Bindemittel vollflächig auf und druckt dann mit der bekannten Tintenstrahldrucktechnologie selektiv Wasser oder flüssiges Bindemittel auf. Dadurch härtet der Beton bzw. Mörtel an diesen Stellen aus. Danach bringt man die nächste Schicht von trockenem Beton, Mörtel oder Bindemittel vollflächig auf und bedruckt auch diese wieder mit Wasser oder flüssigem Bindemittel. Dies wird solange wiederholt, bis das erwünschte Modell aufgebaut ist. So entsteht der gewünschte Körper, der nach Beendigung des Schichtbauprozesses vom umliegenden Pulver befreit werden muss. Solch ein Verfahren ist z.B. in DE 102011105688 A1 beschrieben.

Nachteilig daran sind
a) der hohe Anteil an nicht ausreagiertem pulverförmigem Beton, Mörtel oder Bindemittel;
b) die notwendigen hohen Wasser/Zementwerte bzw. Wasser/Bindemittelwerte, welche sich in niedrigen Festigkeiten auswirken;
c) die niedrige Packungsdichte der entstehenden Festbeton- bzw. Festmörtelschichten aufgrund geringer Dichte der trockenen Schüttungen beim Aufbringen dieser; und
d) schlecht definierte Ränder der Schichten/Bahnen, da Wasser bzw. Bindemittel teils undefiniert nach außen gesaugt wird. Dies äußert sich in rauen Außen- und Innenbegrenzungsflächen der aufgebauten Objekte.

b) und c) führen zu niedrigen Festigkeiten. Dies äußert sich einerseits in verlängerten Wartezeiten, bis der gedruckte Bauteil vom umliegenden Trockenmaterial getrennt werden kann, und andererseits in niedrigen erreichbaren Endfestigkeiten (die z.B. zur Erzielung einer Frostbeständigkeit oder Frost-Tausalzbeständigkeit wichtig wären).

Ähnliches gilt für das System, das in US 8211226 B2 beschrieben ist: dort wird eine spezielle Betonrezeptur für einen ZPrinter^{®} bereitgestellt. Der unter der Marke ZPrinter^{®} vertriebene 3D-Drucker führt aber immerhin nicht benötigtes, überschüssiges pulverförmiges Material in den Vorratsbehälter zurück, sodass wenigstens der Materialverbrauch reduziert wird.

Schließlich fehlt es auch nicht an Versuchen, das Material direkt in flüssiger Form aufzubringen und unmittelbar danach auszuhärten. Ein Beispiel dafür ist in WO 2016/024863 A1 beschrieben. Gemäß dieser Schrift werden 3D-Modelle aus einem Gemisch von Ton und Flugasche hergestellt, das in eine Pelletsform überführt wird, wobei dann Pellet um Pellet mit Druckluft auf die gewünschte Stelle geblasen wird, wobei jedes Pellet unmittelbar nach dem Aufbringen durch Heißluft oder Laser ausgehärtet wird.

Es ist offensichtlich, dass dieses Verfahren relativ langsam ist, weil das gewünschte Modell Pellet um Pellet aufgebaut und ausgehärtet werden muss.

Ein 3D-Druckersystem der eingangs genannten Art ist aus CN 204354263 U bekannt.

Es ist Aufgabe der vorliegenden Erfindung, ein 3D-Druckersystem mit einer Düse zum Ausbringen von plastischem Beton, Mörtel oder dergleichen der eingangs genannten Art so auszubilden, dass mit ihr direkt 3D-Drucke präzise erstellt werden können.

Diese Aufgabe wird durch ein 3D-Druckersystem mit einer Düse der eingangs genannten Art erfindungsgemäß dadurch gelöst, dass zwischen der Zusatzöffnung und der Austragsöffnung ein aktiv angetriebenes Mischwerk mit einem Mischrohr vorgesehen ist und der Innendurchmesser des Mischrohrs 2-8 cm, vorzugsweise 2-6 cm, besonders bevorzugt 2-4 cm beträgt.

Auf Grund dieser geringeren Größe im Vergleich zur DE 20215662 U1 ist diese Düse geeignet, geringe Betonmengen (Mörtelmengen) mit hoher Präzision abzugeben, wie sie für den 3D-Druck erforderlich sind.

Es wurde im Rahmen zahlreicher Versuche festgestellt, dass es möglich ist, dem Beton in der Düse Beschleuniger der Art und in der Menge zuzusetzen, dass das Abbinden innerhalb von 1-2 Minuten beginnt und nach etwa 10 Minuten beendet ist. Damit wird ermöglicht, dass der Beton bzw. Mörtel bereits in der Düse anzusteifen beginnt und dass der Beton schon beim Austritt aus der Düse steif ist. Damit ist es möglich, die Materialabgabe kurzfristig zu unterbrechen, um die Düse zum nächsten Punkt, wo Material benötigt wird, zu bewegen, ohne dass das Abbinden bereits in der Düse beginnt. (Diese Bewegungen dauern meist nur einige Sekunden.) Umgekehrt erfolgt das Abbinden so langsam, dass es noch nicht beendet ist, wenn die nächste Lage aufgebracht wird (das Aufbringen einer Lage dauert höchstens wenige Minuten), sodass die neue Lage mit der darunter liegenden Lage eine feste Verbindung eingeht, d.h. es entsteht durch den innigen Schicht-Lagenverbund ein monolithischer Körper. Dennoch bleibt der Beton bzw. Mörtel nach dem Aufbringen infolge seiner Steifigkeit bereits formstabil.

Im Gegensatz zu Spritzbeton ist es jedoch notwendig, in der Düse ein aktives Mischwerk vorzusehen, da ansonsten die homogene Durchmischung des Betons bzw. Mörtels mit dem Beschleuniger bzw. weiteren Zusatzstoffen, zum Beispiel durch passive Leitelemente (statische Mischer) bzw. andere Arten der Beschleunigereinbringung (z.B. Eindüsung über Ringdüsen) nicht sichergestellt werden kann.

Eine zielgenaue und homogene Beschleuniger- bzw. Zusatzstoffeinbringung in den Beton bzw. Mörtel ist jedoch für eine exakte Ausführung von 3D-Objekten und Bauteilen erfindungsgemäß unumgänglich.

Die Düse ermöglicht, in einen kontinuierlich geförderten Beton- bzw. Mörtelstrom kurz vor der 3D-Applikation gezielt Additive bzw. Zusatzstoffe einzudosieren und mittels aktiv angetriebenen Mischers in sehr kurzer Zeit intensiv und homogen einzumischen.

Es liegt auf der Hand, dass diesbezüglich dem im Mischrohr eingesetzten Mischwerkzeug übergeordnete Bedeutung zukommt. In dem Mischrohr ist vorzugsweise ein Mischwerkzeug mit Mischelementen vorgesehen, die als Schaufeln, Paddeln, Stäbe oder als ein Schneckengang oder als mehrere Schneckengänge ausgebildet sind. Die Schneckengänge können ganz oder teilweise gegenläufig oder gleichläufig zum Materialstrom angetrieben sein.

Um ein aktives Mischwerk in einfacher Weise zu realisieren ist nach einer Ausgestaltung der Erfindung vorgesehen, dass die Düse einen ersten Abschnitt und einen zweiten geraden Abschnitt aufweist, wobei die Hauptöffnung am Anfang des ersten Abschnitts und die Austragsöffnung am Ende des zweiten Abschnitts vorgesehen ist, dass das Mischwerk eine Welle hat, die koaxial im zweiten Abschnitt angeordnet ist und die Mischelemente trägt, dass die Welle den zweiten Abschnitt gegenüber der Austragsöffnung durchdringt und dass ein Motor außerhalb der Düse zum Antrieb der Welle vorgesehen ist. Auf diese Weise kann man also eine gerade, starre Welle vorsehen, die man mit einem Motor außerhalb der Düse antreibt, sodass der Motor nicht speziell abgedichtet werden muss, um dem Materialstrom standzuhalten.

In einer bevorzugten Variante ist die Welle kurbelwellenartig ausgebildet. Durch die senkrecht zum Mörtelstrom angeordneten Querstäbe der Welle wird der Mörtelstrom immer wieder "unterbrochen" und damit intensiv vermischt, und die Längsstäbe, die knapp am Mischrohr vorbeigeführt werden, bewirken hohe Scherkräfte und somit ebenfalls eine innige Durchmischung. Dabei ist es günstig, wenn die Welle zusätzlich mit Mischelementen in Form von Querstäben und/oder Längsstäben versehen ist.

Es ist zweckmäßig, wenn der Innenwinkel β zwischen dem ersten Abschnitt und dem zweiten Abschnitt stumpf ist, vorzugsweise zumindest 120°. Auf diese Weise muss der Beton bzw. Mörtel nur wenig umgelenkt werden, sodass die Gefahr einer Verstopfung gering ist.

Weiters ist es zweckmäßig, wenn der Winkel zwischen der Längsachse des Mischrohrs und der Austragsrichtung der Düse maximal 75°, vorzugsweise maximal 30°, stärker bevorzugt maximal 10°, insbesondere etwa 0° beträgt.

Auf Grund der notwendigen Homogenität und Präzision des Volumenstromes sollte der Beton bzw. Mörtel, nachdem er mit dem Beschleuniger bzw. weiteren Zusatzstoffen im Mischwerk vermischt wurde, möglichst nicht mehr mechanisch beansprucht werden, aus strömungstechnischen Gründen insbesondere möglichst nicht mehr abgelenkt werden. Aus diesem Grunde sollte die maximale Ablenkung nach dem Mischer jedenfalls deutlich geringer als 90° sein, vorzugsweise findet überhaupt keine Ablenkung statt.

Vorzugsweise ist zwischen dem Mischwerk und der Austragsöffnung ein Ventil zum kurzfristigen Stoppen des Materialflusses vorgesehen und/oder weist die Düse einen Einlass für Druckluft zum Ausblasen des Betons, Mörtels oder dergleichen auf.

Auf diese Weise kann der Materialfluss nach Belieben kurzfristig gestoppt werden: entweder ist ein Ventil vorgesehen, das vor der Austragsöffnung platziert ist; und/oder die Düse bzw. die Austragsöffnung ist als Druckluftdüse (sprühendes Auftragsverfahren) ausgebildet, sodass eine Unterbrechung des Materialauftrages durch Unterbrechen des Druckluftstromes und/oder ebenfalls durch ein vorgeschaltetes Ventil kurzfristig gestoppt werden kann.

Vorzugsweise ist das Ventil ein pneumatisch betätigbares Quetschventil. Solche Ventile sind robust und können rasch durch Druckluftzufuhr geschlossen werden und sie öffnen auch rasch, wenn die Druckluftzufuhr unterbrochen wird.

Wie bereits erwähnt beginnt das Abbinden des Betons, nachdem er mit dem Beschleuniger in Kontakt gekommen ist, bereits nach 1-2 Minuten. Kurzzeitige Unterbrechungen des Druckvorganges sind somit problematisch, wenn nicht weitere Vorkehrungen getroffen werden. Aus diesem Grund ist nach einer weiteren Ausgestaltung der Erfindung vorgesehen, dass im Bereich der Zusatzöffnung ein 3-Wege-Ventil, vorzugsweise ein Nadelventil, vorgesehen ist, welches die Kontaktzone des Beschleunigers bzw. Zusatzstoffes zum Beton, Mörtel od. dgl. hin unterbrechen kann.

Die Einbringung des Beschleunigers bzw. weiterer Additive erfolgt über ein 3 Wege-Injektorventil, das in einer bevorzugten Ausführungsform über Druckluft angesteuert und pneumatisch die Kontaktzone des Beschleunigers bzw. Additives über einen Nadelöffnungs- und Schließmechanismus (Nadelventil) öffnet bzw. unterbricht und verschließt. Dadurch wird in der unmittelbaren Kontaktzone ein Verschließen der Eintrittsöffnung des Beschleunigers bzw. Additives durch aushärtenden Beton/Mörtel verhindert.

Vorzugsweise kann über das 3-Wege-Ventil auch eine Spülmittelzufuhr erfolgen. Die Düse ist dann so ausgestaltet, dass bei einem längeren Stopp des Druckvorganges ein Reinigungsprozess durchlaufen werden kann, indem mittels Spülwassers das komplette Mischwerkzeug und der adäquate Mischerinnenraum gespült und gereinigt werden kann.

Nach einer weiteren Ausgestaltung der Erfindung ist vorgesehen, dass die Düse zum Zwecke von Reinigungs- und Wartungsarbeiten aus zwei Halbschalen besteht, wobei vorzugsweise innerhalb der Halbschalen eine an der Mischrohrwand anliegende Verschleißhülse platziert ist, um Abrieb und Verschleiß an den Wänden der Halbschalen zu verhindern und dadurch die Standzeit der Bauteile der Düse zu verlängern. Die Konstruktion der Düse ist also so ausgeführt, dass diese einfach in zwei Teile (Halbschalen) zu zerlegen ist und alle innenliegenden Bereiche zugänglich sind und damit gereinigt und gewartet werden können.

Bauteile bzw. Druckobjekte aus Beton/Mörtel, die mittels additivem Herstellungsverfahren gedruckt werden, erhalten durch den verfahrenstypischen Prozess (Filamentverfahren, die einzelnen Bahnen bzw. Layers werden nacheinander Schicht für Schicht aufgebaut) eine spezielle Oberflächenstruktur. Diese ist rillen-, riefen- bzw. schichtartig, da es im Randbereich der Bahnen/Layers verfahrenstypisch zu keiner exakten, lückenlosen Verbindung der einzelnen Bahnen/Layers kommt. Neben einer leichten mechanischen Schwächung des Bauteilgefüges, die durch die Rillen bzw. Riefen bedingt ist (Kerbwirkung), bietet die inhomogene Oberfläche auch eine erhöhte Angriffsfläche für spätere äußere Einwirkungen verschiedenster Art (Expositionen wie Wasser oder andere Flüssigkeiten, Frost, Frost-Tau, Karbonatisierung, chemischer Angriff, Mikroorganismen, Ablagerungen verschiedenster Art etc.). Die beschriebene rillenartige Oberflächenstruktur kann vor allem auch vom optischen Eindruck her nachteilig wirken, da diese im Unterschied zu glatten Oberflächen keinen perfekt homogenen Eindruck vermittelt.

Ein weiterer Nachteil der rillen-, riefen- bzw. schichtartigen Oberfläche ist es, dass nachträgliche Beschichtungen und Coatings im Vergleich zu glatten Oberflächen nur mit erhöhtem Materialverbrauch bzw. aufgrund der Oberflächenstruktur und schwierigeren Zugänglichkeit für Beschichtungen nur mit erhöhtem technischen Aufwand appliziert werden können.

Um diese rillen-, riefen- bzw. schichtartige Oberfläche zu vermeiden bzw. zumindest weniger ausgeprägt auszubilden, weist die Düse vorzugsweise ein Glättorgan auf, das um die Austragsöffnung herum unlimitiert drehbar ist und dessen Anstellwinkel in Bezug auf die Achse der Austragsöffnung verstellbar ist.

Glättorgane wie Spachteln, Traufeln etc. besitzen glatte Oberflächen aus Materialien wie Metall, Kunststoff, Holz, Keramik etc. Mit der Hilfe von derartigen Glättorganen können weich-plastische bzw. gerade in Erstarrung/Erhärtung befindliche Materialien wie Betone, Mörtel, Estriche, Putze, Spachtelmassen, Kleber etc. durch mechanisches Einwirken auf die Oberfläche plan geglättet werden. Dabei kommt es durch die mechanische Einwirkung (abziehen, verteilen, einebnen) des Glättorganes zu einer Vergleichmäßigung, Homogenisierung und damit Glättung der Bauteil-Oberfläche.

Mit einem Glättorgan kann nur eine Seite, die Innenseite oder die Außenseite, des herzustellenden Bauteils geglättet werden. Meist genügt es, die Außenseite zu glätten. Wenn auch die Innenseite geglättet werden soll, kann man in Bezug auf die Austragsöffnung gegenüber dem Glättorgan ein weiteres Glättorgan vorsehen.

In der Regel wird das Glättorgan und gegebenenfalls auch das weitere Glättorgan dabei tangential an der zu glättenden Oberfläche geführt. Dies bedeutet bei einem im Wesentlichen ebenen Glättorgan, dass es eine Normale auf diese Ebene des Glättorgans gibt, welche die Achse der Austragsöffnung schneidet. Durch die Positionierung in der Tangentialebene in Bezug auf jeden beliebigen räumlichen Punkt der zu glättenden Bauteiloberfläche können auch komplexe Geometrien wie z. B. einfach oder doppelt gekrümmte Freiformen, geglättet werden.

Eine der wesentlichen Grundeigenschaften von zementgebundenen mineralischen Baustoffen (Betonen und Mörteln) ist, dass diese hohe Druckfestigkeiten, aber vergleichsweise nur geringe Zug- bzw. Biegezugfestigkeiten aufweisen. Im Belastungsfall wirken durch statisch bzw. dynamisch eingebrachte Kräfte auf das Bauteil fast immer Zug- bzw. Biegezugkräfte ein, die bei Überschreiten der Eigenfestigkeit des Bauteils in der Regel dafür verantwortlich sind, dass es zum Bauteilversagen/Bruch kommt. Daher ist es beim Auftreten höherer Kräfte und bei statischen/dynamischen Belastungen derzeit Stand der Technik, derartige zementgebundene Bauteile zu bewehren. Zur Bewehrung/Bauteilverstärkung werden überwiegend Stahleinlagen, aber auch alternative Werkstoffe aus faserartigem Basismaterial wie Carbon, SiC, Basalt, Keramik, Wollastonit, AR-Glas oder polymeren Werkstoffen in Form von Fasern, Gittern, Stäben, Fäden, Gelegen, Geflechten, Trägern etc. eingesetzt.

All diese Werkstoffe haben die Grundeigenschaft, dass sie sehr hohe Zug- bzw. Biegezugkräfte aufnehmen können und daher in Kombination mit den relativ spröden, zementgebundenen mineralischen Baustoffen in Bauteilen eine deutliche Verbesserung der Zug- bzw. Biegezugfestigkeits-eigenschaften erzielen.

Um nun diese Vorteile auch bei einem erfindungsgemäßen 3D-Druck nützen zu können ist nach einer weiteren Ausgestaltung vorgesehen, dass die Düse zwei Austragsöffnungen aufweist, die einen Abstand zueinander haben, sodass zwischen die Austragsöffnungen ein Bewehrungselement in Form von Streifen, Gittern, Bändern, Geflechten, Gelegen, Matten, Stäben oder Fäden positioniert und durch die Materialapplikation von zwei Seiten satt von Beton/Mörtel ummantelt werden kann. Dieses Bewehrungselement kann aus Platzgründen nur eine relativ geringe Höhe aufweisen, es ist also im Wesentlichen ein Band bzw. ein Streifen. Es können erfindungsgemäß mehrere Streifen, Bänder, Geflechte, Gelege bzw. Matten übereinander und einander überlappend angeordnet werden, sodass sich auf diese Weise insgesamt ein flächiges Bewehrungselement ergibt.

Das Bewehrungselement kann flexibel, verformbar und umlenkbar, aber auch starr sein. Es kann sich hierbei um textile oder faserartige Bewehrungselemente, aber auch um Bewehrungen aus metallischen, polymeren oder anderen nichtmetallischen Werkstoffen handeln. Die flexible Verformung des Bewehrungselementes kann z.B. auch durch eine kurzzeitige thermische Behandlung des Bewehrungselementes ermöglicht werden.

Alternativ dazu kann man auch in einem 3D-Druckersystem für Beton und Mörtel und dergleichen zwei erfindungsgemäße Düsen vorsehen, wobei eine Steuerung die beiden Düsen synchron zu beiden Seiten eines Bewehrungselements führt. In diesem Fall kann das Bewehrungselement von Anfang an großflächig ausgebildet sein.

Die Verwendung der Düsen dient zur Herstellung von 3D-gedruckten Objekten und Bauteilen auf Basis von Beton, Mörtel oder dergleichen, wobei als Zusatzstoff ein Abbindebeschleuniger durch die Zusatzöffnung zugeführt wird. Als Abbindebeschleuniger wird vorzugsweise eine Lösung auf Basis von Aluminiumsulfat zugeführt. Zusätzlich zu dem Abbindebeschleuniger kann durch eine Abmischung mit dem Beschleuniger oder durch Zufuhr als "Reinsubstanz" durch eine eigenen Zusatzöffnung zumindest ein weiterer Zusatzstoff, insbesondere Wasser, Farbpaste, Luftporenmittel, Fließmittel, Verzögerer, Verdicker, Bindemittel, Füllstoffe, Zuschlagstoffe und/oder Fasern, zugeführt werden.

Bevorzugt wird ein Trockenbeton oder ein Trockenmörtel eingesetzt, der in räumlicher Nähe zur Düse mit Wasser versetzt und gemischt und der Düse über einen Schlauch zugeführt wird. Da der Beton bzw. Mörtel im Schlauch noch nicht mit dem Beschleuniger versetzt ist, ist die Verweilzeit im Schlauch nicht kritisch. Erst nach Zugabe des Beschleunigers in der Düse sollte die Verweilzeit geringer als zwei Minuten sein, um ein Abbinden in der Düse mit Sicherheit zu vermeiden.

Wie bereits bezüglich des Glättorgans ausgeführt, erhalten Bauteile bzw. Druckobjekte aus Beton/Mörtel, die mittels additivem Herstellungsverfahren gedruckt werden, durch den verfahrenstypischen Prozess eine rillen-, riefen- bzw. schichtartige Oberflächenstruktur.

Es ist daher eine Verwendung der Düse bevorzugt, bei der nach dem schichtweisen Aufbringen von Beton, Mörtel oder dergleichen die entstandenen Rillen durch Besprühen mit einer Düse, die einen Einlass für Druckluft zum Ausblasen des Betons, Mörtels oder dergleichen aufweist, gefüllt werden, wobei gegebenenfalls zuvor Bewehrungselemente, insbesondere Bewehrungsgitter, aufgelegt werden.

Auf diese Weise wird also - ähnlich wie dies von Spritzbeton bekannt ist - auf die gerillte Fläche Beton bzw. Mörtel oder dergleichen aufgesprüht, sodass die Rillen aufgefüllt werden. Dabei kann zuvor ein Bewehrungsgitter aufgelegt werden, um die mechanische Stabilität des Bauteils zu verbessern.

Wenn sich ein Bewehrungselement in dem Bauteil befinden soll, so ist es zweckmäßig, wenn dieses mittels zweier unabhängig voneinander räumlich geführter Düsen durch die Applikation von Beton/Mörtel von zwei Seiten koaxial eingebettet bzw. eingespritzt bzw. eingesprüht wird.

Insbesondere dann, wenn ein Bewehrungselement nicht mit zwei unabhängig voneinander geführter Düsen, sondern mit einer Düse mit zwei Austragsöffnungen eingebettet werden soll, kann das Bewehrungselement nicht allzu hoch (breit) sein. Es ist daher zweckmäßig, wenn durch eine überlappende Positionierung von einzelnen Bewehrungselementen ein homogenes, verstärkendes Bewehrungsnetz im Inneren des Bauteils aufgebaut wird. Somit ist auch in diesem Fall kein statischer Nachteil gegeben, obwohl die Bewehrung aus bandförmigen Einzelelementen zusammengesetzt ist.

### Kurze Beschreibung der Zeichnungsfiguren

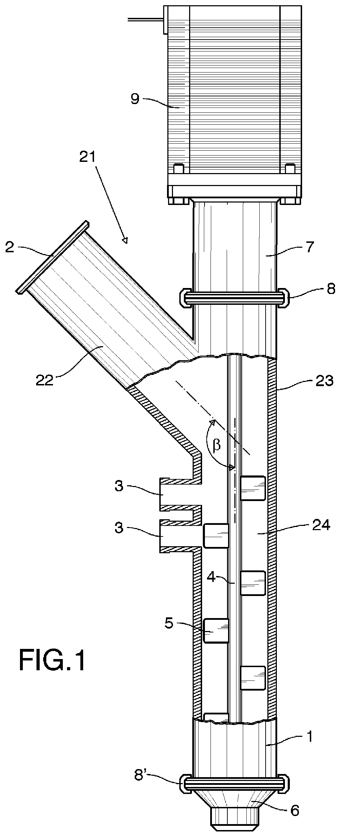

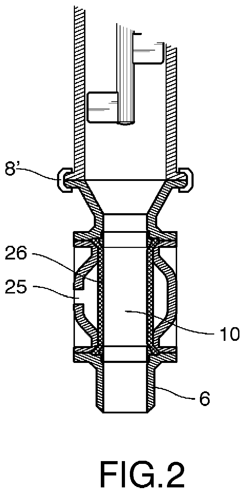

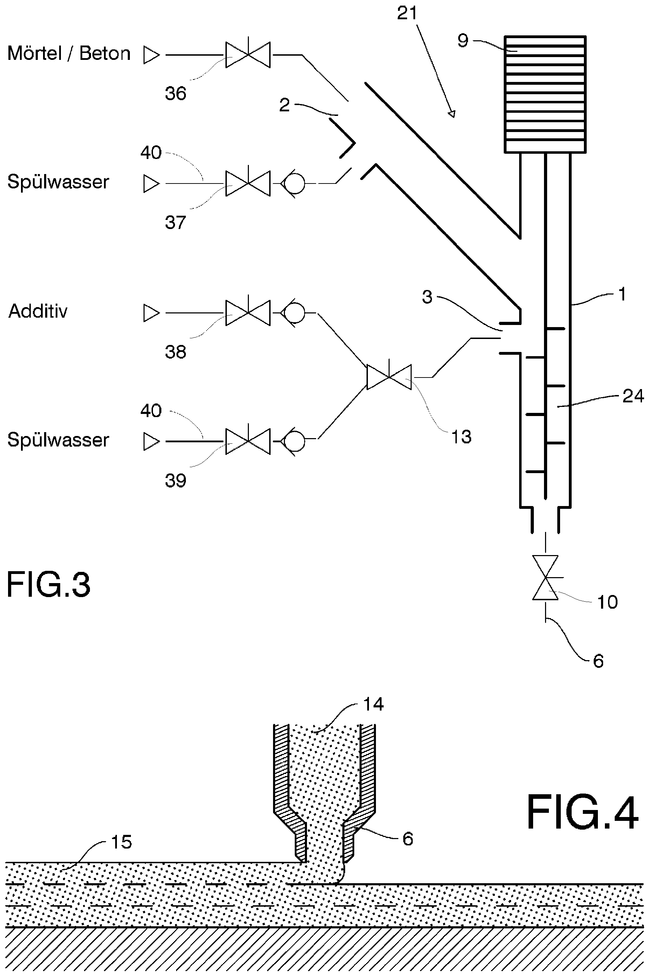

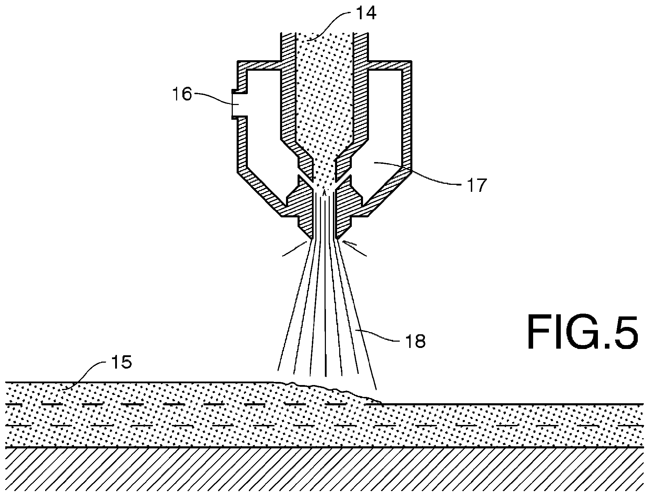

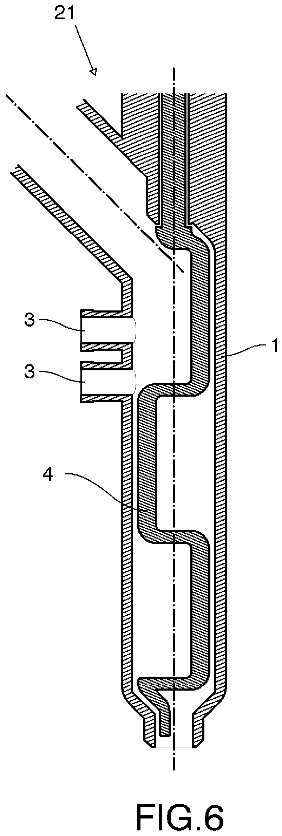

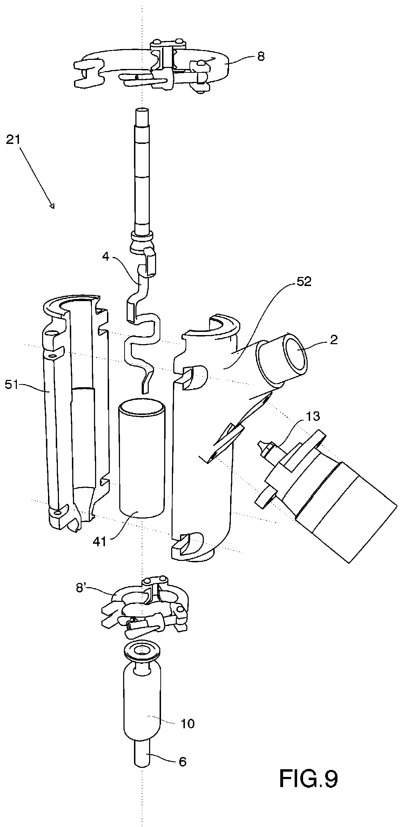

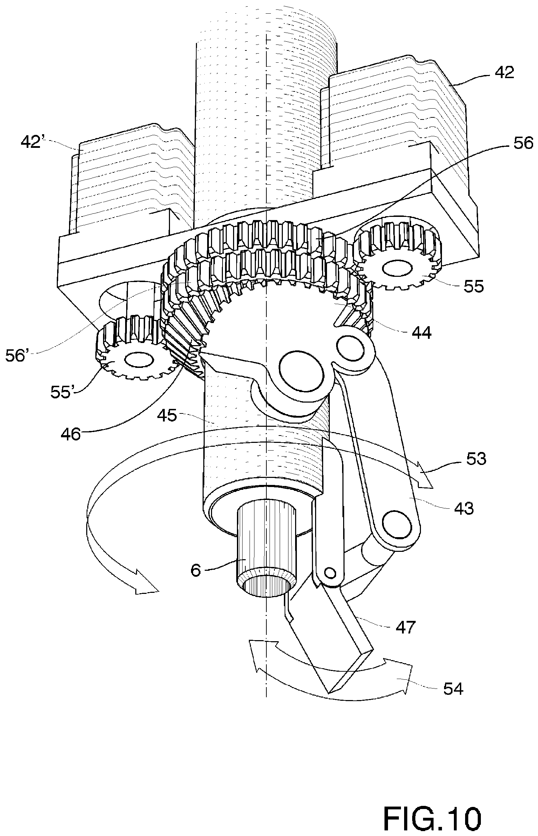

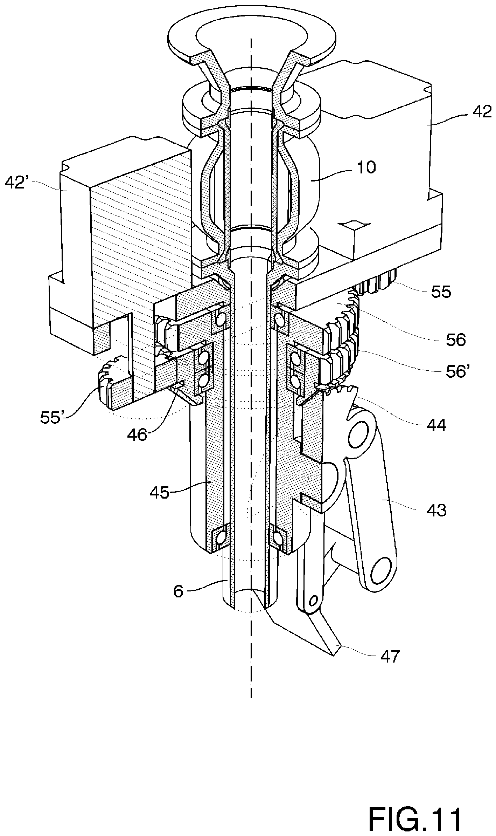

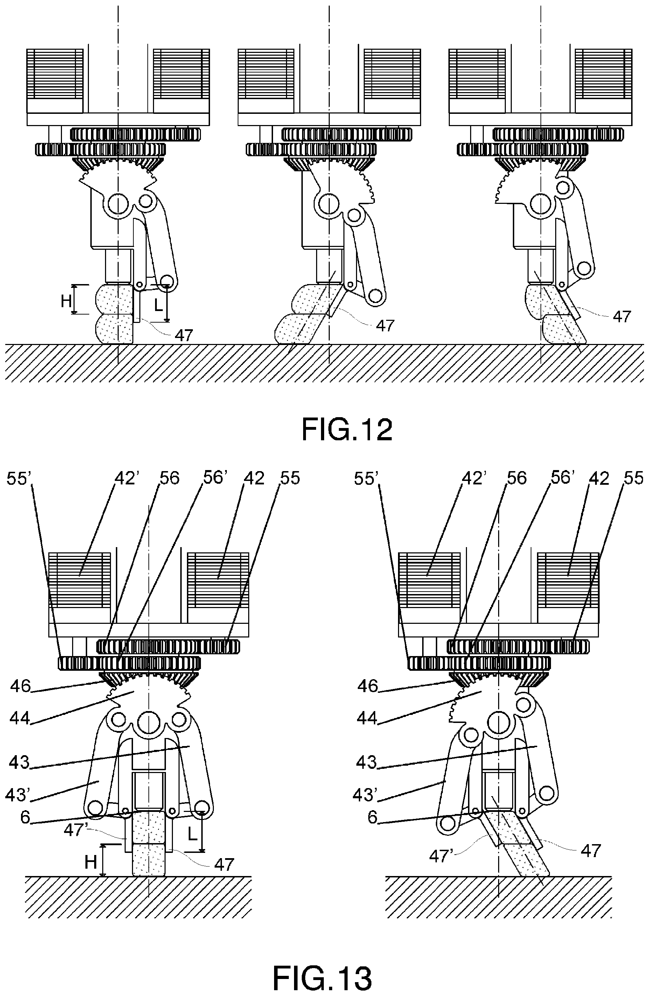

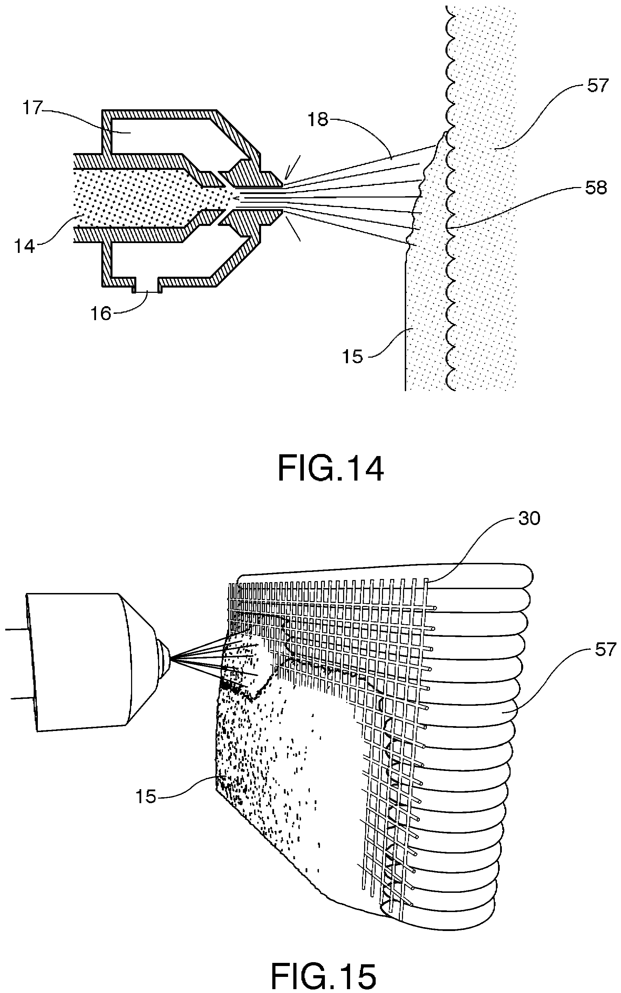

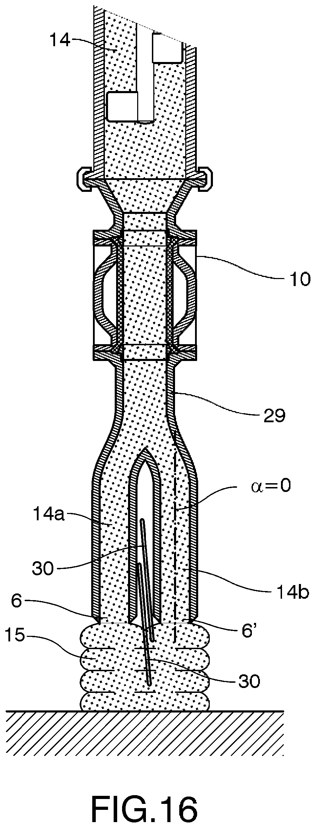

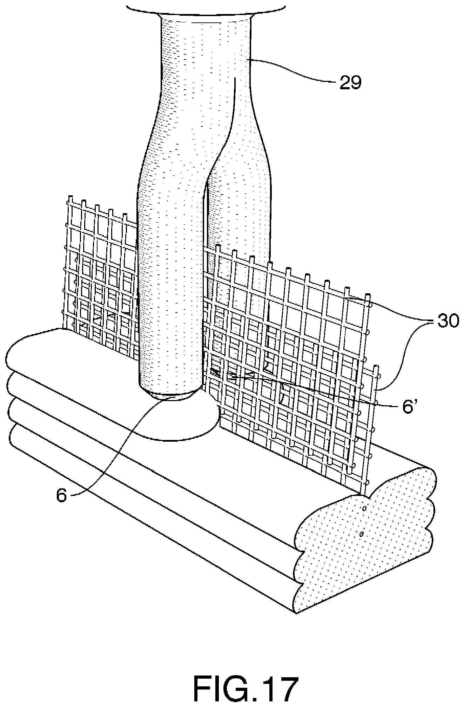

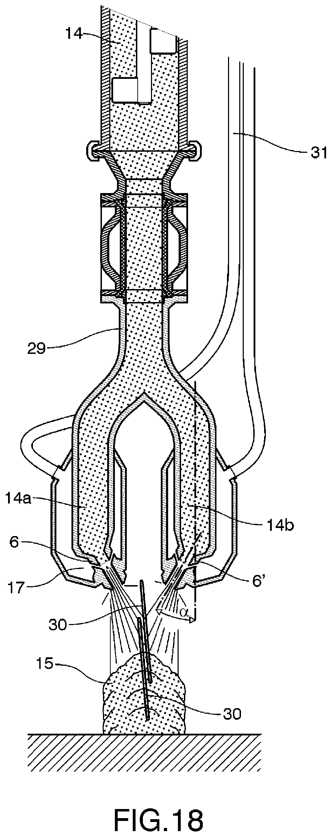

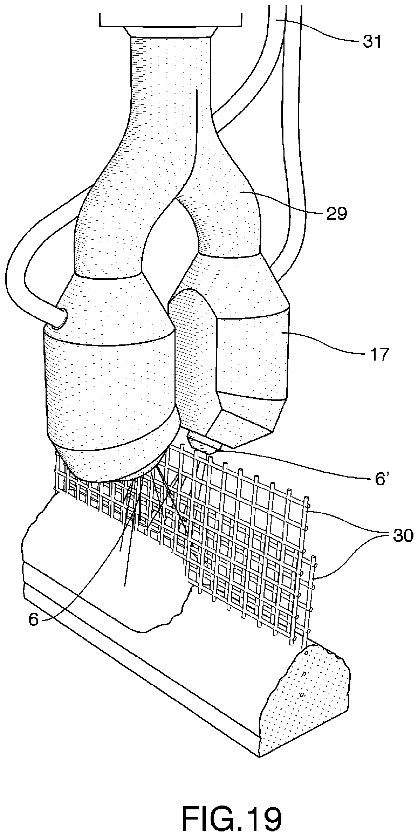

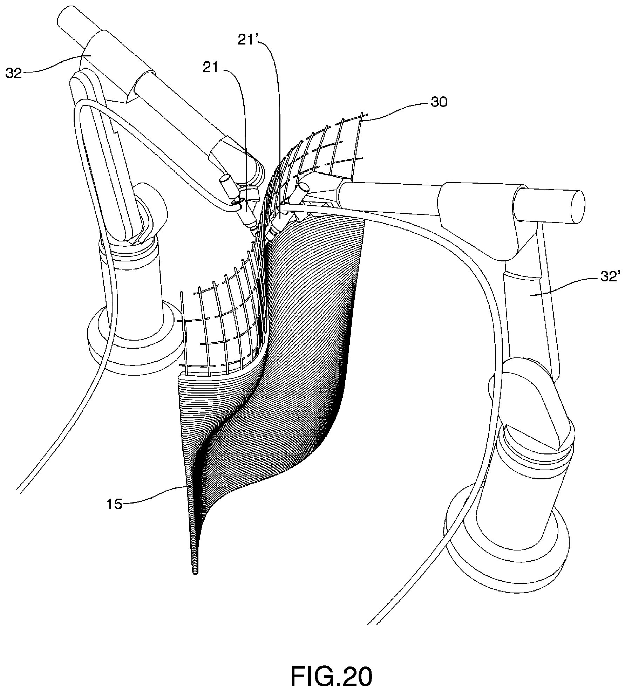

An Hand der beiliegenden Zeichnungen wird die vorliegende Erfindung näher erläutert. Es zeigt: Fig. 1 eine Düse ohne auslaufseitiges Ventil und ohne Druckluftzufuhr, teilweise im Schnitt; Fig. 2 das untere Ende dieser Düse, versehen mit einem Ventil; Fig. 3 die Verwendung, schematisch dargestellt, einer Düse gemäß den Fig. 1 und 2; Fig. 4 das schichtweise Aufbringen von Beton oder Mörtel mit einer Düse gemäß Fig. 1; Fig. 5 das schichtweise Aufbringen von Beton oder Mörtel mit einer Düse mit Druckluftzufuhr; Fig. 6 bis 8 verschiedene bevorzugte Ausführungsformen von Mischerwerkzeugen; Fig. 9 eine Explosionsdarstellung einer Düse; Fig. 10 eine Düse mit einem Glättorgan; Fig. 11 dieselbe, teilweise im Schnitt; Fig. 12 verschiedene Einstellungen dieser Düse; Fig. 13 eine Ansicht ähnlich wie Fig. 12, jeder einer Düse mit zwei Glättorganen; Fig. 14 das Überziehen bzw. Glätten einer bereits gedruckten Struktur mithilfe einer Düse mit Druckluftzufuhr; Fig. 15 dasselbe, allerdings unter Verwendung eines Bewehrungsgitters Fig. 16 eine Düse mit zwei Austragsöffnungen im Schnitt; Fig. 17 dieselbe in perspektivischer Ansicht; Fig. 18 und 19 zeigen Düsen entsprechend den Fig. 16 und 17, allerdings mit Druckluftzufuhr; und Fig. 20 zeigt die Verwendung von Zweitdüsen, um ein Bauteil mit eingebettetem Bewehrungsgitter herzustellen.

### Beschreibung der Ausführungsarten

Die Düse 21 gemäß Fig. 1 weist einen ersten geraden Abschnitt 22 und einen zweiten geraden Abschnitt 23 auf. Am oberen Ende des ersten geraden Abschnitts 22 befindet sich eine Hauptöffnung 2, durch die Beton, Mörtel oder dergleichen zugeführt werden kann. Am unteren Ende des zweiten geraden Abschnitts 23 befindet sich - angekuppelt über eine Anschlusskupplung 8' - eine Austragsöffnung 6, durch welche das zugeführte Material aus der Düse wieder austreten kann. Dazwischen befindet sich mindestens eine Zusatzöffnung 3, durch welche ein Additiv (flüssig oder pastös) zugegeben werden kann. Für den 3D-Druck wird dieses Additiv jedenfalls einen Erstarrungsbeschleuniger enthalten. Der Innenwinkel β zwischen dem ersten Abschnitt 22 und dem zweiten Abschnitt 23 ist stumpf (zum Beispiel 135°), sodass das Material beim Durchlaufen der Düse 21 nur wenig Richtungsänderung erfährt (also beispielsweise 45°). Der zweite Abschnitt 23 ist über die Verbindungsstelle zwischen erstem Abschnitt 22 und zweitem Abschnitt 23 hinaus bis zu einer Anschlusskupplung 8 verlängert. Über diese Anschlusskupplung 8 ist ein Wellenlager 7 mit einem Motor 9 angekoppelt. Dieser Motor 9 treibt eine Welle 4 an, auf der Mischelemente 5 in Form von Schaufeln angebracht sind. Anstelle von Schaufeln können auch Paddel, Stäbe oder Schneckengänge angebracht sein. Dadurch ergibt sich im Bereich zwischen den Zusatzöffnungen 3 und der Austragsöffnung 6 ein Mischwerk 24, sodass man den unteren Bereich des zweiten Abschnitts 23 auch als Mischrohr 1 bezeichnen kann.

Anstelle der Austragsöffnung 6 kann man an der Anschlusskupplung 8' ein Ventil 10 mit Austragsöffnung 6 ankuppeln, wie dies in Fig. 2 dargestellt ist. Dieses Ventil 10 ist ein pneumatisches Quetschventil; wenn durch die Einlassöffnung 25 Druckluft eingeblasen wird, wird der flexible Schlauch 26 zusammengepresst, bis sein Innendurchmesser nahezu Null wird und somit jeglicher Materialfluss gestoppt wird. Stoppt man die Zufuhr von Druckluft in die Einlassöffnung 25, nimmt der Schlauch 26 wieder die in Fig. 2 dargestellte Form an und Druckmaterial kann durch die Austragsöffnung 6 abgegeben werden. Durch entsprechende Ansteuerung kann man damit sowohl einen Strang beliebiger Länge erzeugen als auch das Material punktweise aufbringen.

Anhand von Fig. 3 wird die Verwendung solch einer Düse 21 erläutert. Durch die relativ rasch beginnende Erhärtung würde bei längeren Stillstandsphasen des Druckprozesses, z.B. bei längeren Stillstandsphasen von mehreren Minuten oder nach Beendigung des Bauteildruckes, das Material in der Düse 21 bereits zu erhärten beginnen. Die einsetzende schnelle Materialerhärtung führt in der Praxis sehr rasch zu starken Anpackungen am Mischwerk 24, zu einem Verlegen des Mischrohres 1 und im worst case zu einen "Zubetonieren" des Mischerrohrinnenraumes und damit einer irreversiblen Schädigung der Düse 21. Als Folgeerscheinung besteht die Gefahr des Verstopfens der Zuleitungen des Beschleunigers bzw. weiterer Additive an deren Eintrittsöffnung in das Mischrohr 1, also im Bereich der Zusatzöffnung 3.

In einem Vorratsbehälter befindet sich pumpfähiger Beton oder Mörtel, der vor Ort aus Trockenmörtel und Wasser gemischt wurde. Alternativ kann Fertigbeton aus einem Transportbetonwerk, baustellengemischter Beton oder Mörtel oder Werkfertigmörtel verwendet werden. Der pumpfähige Beton oder Mörtel wird durch eine Mörtelpumpe über ein Unterbrecherventil 36 zur Hauptöffnung 2 gepumpt. Weiters ist ein Vorratsbehälter für einen Beschleuniger vorgesehen, der über eine Beschleunigerpumpe, ein Magnetventil 38 und einem 3-Wege-Ventil 13 der Zusatzöffnung 3 zugeführt wird. Es versteht sich, dass die Beschleunigerpumpe die Fördermenge auf den Durchsatz an Mörtel abstimmen muss. Durch das Mischwerk 24 wird der Beschleuniger gleichmäßig im Beton oder Mörtel verteilt, und mittels des Ventils 10 kann der mit dem Beschleuniger versetzte Mörtel punktgenau exakt dosiert aus der Austragsöffnung 6 abgegeben werden.

Ident dem beschriebenen Prozess können im umgebenden Bereich der Zusatzöffnung 3 weitere Zusatzöffnungen 3 für die Dosierung zusätzlicher Additive vorgesehen sein, wie dies in Fig. 1 dargestellt ist.

Die Düse 21 ist so ausgestaltet, dass bei einem geplanten Stopp des Druckvorganges ein Reinigungsprozess durchlaufen werden kann, indem mittels Spülwasser das komplette Mischwerk 24 und der adäquate Mischerinnenraum gespült und gereinigt werden kann.

Die Einbringung des Beschleunigers bzw. weiterer Additive erfolgt über das 3-Wege-Ventil 13, dem nicht nur Additiv über das Magnetventil 38, sondern auch Spülmittel (insbesondere Spülwasser 40) über ein Magnetventil 39 zugeführt werden kann. Das 3-Wege-Ventil 13 wird in einer bevorzugten Ausführungsform über Druckluft angesteuert und öffnet bzw. unterbricht und verschließt pneumatisch die Kontaktzone des Beschleunigers bzw. Additives über einen Nadelöffnungs- und Schließmechanismus (Nadelventil). Dadurch wird in der unmittelbaren Kontaktzone ein Verschließen der Eintrittsöffnung des Beschleunigers bzw. Additives durch aushärtenden Beton/Mörtel verhindert.

Ablauf für eine Druckunterbrechung mit Reinigung:
Für eine Reinigung ist es notwendig, den Beton- bzw. Mörtelmaterialfluss einlaufseitig zu unterbrechen und damit einen weiteren Materialzufluss zu unterbinden. Dazu dient das Unterbrecherventil 36. Unmittelbar unterhalb des Unterbrecherventiles 36 wird durch eine Zuflussöffnung - über ein Magnetventil 37 geschaltet - Spülwasser 40 in das Mischrohr 1 eingebracht und dadurch der erste Abschnitt der Düse, das komplette Mischwerk 24 und die Mischkammer gespült. Weiters wird auch auf Seite der Beschleunigereinbringung bzw. bei der Einbringung weiterer Zusatzkomponenten/Additive die Zuleitung durch Umschalten des 3-Wege-Injektorventils 13 auf eine Spüllösung 40 gereinigt. Dadurch ist gewährleistet, dass es in der unmittelbaren Kontaktzone von Beton/Mörtel und Beschleuniger bzw. Zusatzkomponenten zu keinen Verstopfungen der Zuleitung bzw. der Düse 21 kommt.

Durch eine entsprechende Ansteuerung der Magnetventile kann z.B. beim Umschalten auf den Spülvorgang gewährleistet werden, dass die Beton- bzw. Mörtelförderpumpe und die Beschleunigereindüsung gestoppt, das im Betonstrang befindliche einlaufseitige Unterbrecherventil 36 (vorzugsweise ein Quetschventil) geschlossen und die Magnetventile 37 und 39 der Spülleitungen und das auslaufseitige Ventil 10 geöffnet sind.

Während einer Nachlaufzeit des Mischwerks 24 werden so alle Bereiche der Düse 21 gespült. Nach der Spülphase können durch dieses Reinigungskonzept auch längere Stillstandszeiten realisiert werden.

Der Vorteil des beschriebenen Spül- und Reinigungskonzeptes ist es, dass der Druckprozess durch die Ermöglichung von kurzzeitigen Druckunterbrechungen wesentlich flexibler und variabler als bei einem kontinuierlichen Druckprozess gestaltet werden kann.

Nach der Stillstandsphase werden die Beton- bzw. Mörtelförderpumpe und anschließend die Beschleuniger- bzw. die Additivförder- und -dosiereinrichtungen wieder aktiviert, und der Druckprozess kann fortgesetzt werden.

Für kurzzeitige Unterbrechungen während des Druckes genügt es, wenn die Beton- bzw. Mörtelförderpumpe und die Beschleuniger- bzw. Additiveindüsung kurz gestoppt werden, während der Beton/Mörtel in der Mischzone verbleibt.

Im folgenden Text sind die möglichen Systemzustände und Steuerungsabläufe der Düse 21 im Detail beschrieben:

Vom Grundprinzip hat die Düse 21 für die einzelnen Materialkomponenten die in FIG. 3 beschriebenen Öffnungs- und Schließmechanismen, welche in Form einer Reihe von verschiedenen Ventilen automatisiert durch ein elektronisches Steuerungssystem geschaltet werden können, um verschiedene Prozesse und Systemzustände wie Starten, Drucken, Stoppen und Reinigungsschritte zu ermöglichen.

Mit den in FIG. 3 dargestellten Ventilen 36 bis 39, dem 3-Wege-Ventil (Beschleuniger-Absperrventil) 13, welches in bevorzugter Form als Nadelventil ausgeführt ist, dem Quetsch-Ventil 10 am Düsen-Ende und den zwei Leitungen für Spülwasser 40 kann automatisch zwischen folgenden Systemzuständen umgeschaltet werden:

**Tabelle 1**

| | |
|---|---|
| "Startbetrieb/Füllen" | 36, 10 offen; 37; 38, 39, 13 geschlossen |
| "Drucken" | 36, 10; 38, 13, offen; 37, 39 geschlossen |
| "Kurzzeitig Stoppen" | alle angeführten Ventile geschlossen |
| "Injektor Spülen" | 39, 13, 10 offen; 36, 37, 38 geschlossen |
| "Düse Spülen" | 37, 10 offen; 36; 38, 39, 13 geschlossen |

Der Systemzustand "Startbetrieb/Füllen" ist dem Druckprozess vorgeschaltet. Dies gewährleistet, dass beim Druckstart die Mischzone bereits mit Mörtel/Beton gefüllt ist.

Beim Systemzustand "Drucken" sind alle Ventile geöffnet, nur die Magnetventile 37 und 39 für das Spülwasser sind geschlossen.

Um zwischen nicht zusammenhängenden Druckpfaden ohne ungewünschten Materialaustritt die räumliche Position der Düse zu ändern, verschließt der Systemzustand "Kurzzeitig Stoppen" alle Ventile (36 bis 39, 10 und 13). Nach kurzer Stehzeit muss der Druckprozess fortgesetzt oder ein Spülvorgang "Injektor Spülen" eingeleitet werden, um ein Verstopfen des Drucksystems zu vermeiden.

Vor längeren Stehzeiten ist eine Reinigung mittels beider Spülprogramme ("Injektor Spülen" und "Düse Spülen") notwendig.

In Fig. 4 ist eine Düse im Betrieb dargestellt, wobei ein Beton-/Mörtelstrang bzw. eine -schicht 15 kontinuierlich aus der Austragsöffnung 6 abgegeben wird. Wenn keine besonders detaillierte Formgebung notwendig ist, kann auf diese Weise sehr rasch das notwendige Material aufgebracht und das 3D gedruckte Objekt schichtenförmig aufgebaut werden. Der jeweils nächste "frisch in frisch" aufgebrachte darüber liegende Beton-/Mörtelstrang 15 geht mit dem darunterliegenden Material eine innige Verbindung ein, weil dieses noch nicht fertig abgebunden hat.

In Fig. 5 ist schließlich dargestellt, dass eine Düse mit Druckluftzufuhr verwendet wird. Es ist eine Druckluftkammer 17 vorhanden, die über einen Einlass 16 für Druckluft mit Druckluft beaufschlagt werden kann. Die Druckluft wird verwendet, um den zugeführten Beton oder Mörtel 14 auszublasen, sodass das Material in einem Spritzstrahl 18 mit relativ hoher Energie auf den Untergrund trifft. Auch auf diese Weise kann ein Strang 15 aufgebracht werden. Der Vorteil dieses Auftragsverfahrens ist, dass durch die hohe kinetische Energie, die der Beton oder Mörtel durch das Austragsverfahren erhält, sehr hohe Materialhomogenitäten resultieren. Ein schichtenförmiger Auftrag ist optisch im fertigen Werkstück kaum mehr wahrnehmbar.

Fig. 6 zeigt einen Querschnitt durch eine Düse 21 mit einem bevorzugten Mischwerkzeug. Dieses weist eine Welle 4 in Form einer Kurbelwelle auf. Diese entlang der Achse des Mischrohres 1 drehbar gelagerte Welle 4 ist von der zentralen Achse wie beim Maschinenelement Kurbelwelle immer wieder exzentrisch ausgelenkt, wie in FIG. 6 zu sehen. Dadurch kommt es zu effektiven mechanischen und strömungstechnischen Mischeffekten, indem der in Richtung der Mischrohrachse verlaufende Mörtelstrom und die durch die Zusatzöffnung 3 zudosierten Additive durch die senkrecht zum Mörtelstrom angeordneten Querstäbe der Welle 4 immer wieder "unterbrochen" und damit intensiv vermischt werden. Weiters hat sich in Versuchsreihen gezeigt, dass die exzentrischen Stabelemente, die am Rand des Mischrohres 1 wirken, durch deren Scherwirkung an der Innenwand des Mischrohres 1 eine sehr positive Auswirkung auf das Mischergebnis haben.

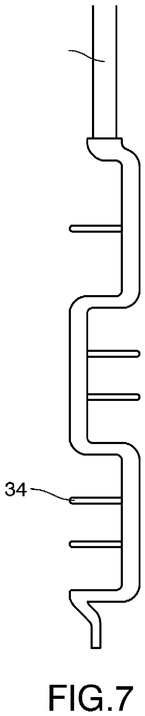

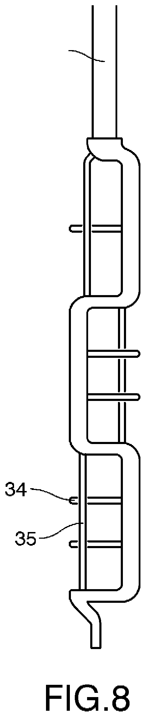

In weiteren Testreihen zeigte es sich, dass zusätzlich eingebaute Querstäbe 34, wie in FIG. 7 dargestellt, und Querstäbe 34 mit zusätzlichen Längsstäben 35, wie in FIG. 8 dargestellt, eine weitere Verbesserung des Mischergebnisses bringen und daher erfindungsgemäß besonders bevorzugte Ausführungsvarianten beschreiben.

Eine Explosionsdarstellung einer Düse 21 mit solch einer Welle 4 ist in Fig. 9 gezeigt. Für eine leichte Wartung und Reinigung besteht die Düse aus zwei Halbschalen 51, 52. Diese können rasch und einfach mittels zweier Anschlusskupplungen 8, 8', bevorzugt ausgeführt in Form von Schnellspannschellen, von den darüber- und darunterliegenden Teilen der Düse 21 (Motor, nicht dargestellt, und Ventil 10 mit Austragsöffnung 6) getrennt und dann vollständig geöffnet werden. Somit sind alle Bereiche der Mischzone, der Mörteleintrittsöffnung und der Zutrittszone für Beschleuniger bzw. Additive frei zugänglich und können gereinigt bzw. gewartet werden.

Bei einem längeren Gebrauch kommt es durch den Mischvorgang, durch abrasiv wirkende Beton- bzw. Mörtelkomponenten wie Zuschlagstoffe, Sande etc. im Bereich der Innenwandung in der Mischzone der Düse 21 zu einem Materialabtrag bzw. starkem Verschleiß. Dies verkürzt die Standzeit der Bauteile der Düse 21 deutlich. Innerhalb der Halbschalen 51, 52 ist daher eine anliegende Verschleißhülse 41 als Mischrohr platziert, um den Abrieb und Verschleiß an den Wänden der Halbschalen 51, 52 zu verhindern und dadurch die Standzeit der Bauteile der Düse 21 zu verlängern.

Wie bereits in der Beschreibungseinleitung erwähnt, kann es aus den verschiedensten Gründen erwünscht sein, die infolge des schichtweisen Aufbringens verfahrenstypisch entstehenden Rillen zu vermeiden bzw. zumindest zu verringern. Eine Möglichkeit dazu ist in den Fig. 10 bis 13 gezeigt. Um die Austragsöffnung 6 herum ist ein Glättorgan 47 bzw. eine Spachtel drehbar angeordnet. Damit kann die Bauteiloberfläche im Druckprozess simultan durch einen gezielt gesteuerten mechanischen Prozess geglättet werden.

In Abhängigkeit, ob nur eine Fläche oder beide Flächen ("Außen-" bzw. "Innenfläche") des zu druckenden Bauteiles bzw. Druckobjektes geglättet werden sollen, ist nur das Glättorgan 47 vorhanden (Fig. 10 bis 12) oder zusätzlich ein weiteres Glättorgan 47' (Fig. 13) vorhanden.

Wie in FIG. 10 und 11 dargestellt, kann das Glättorgan 47 Bewegungen in zwei Richtungen ausführen. Eine Bewegungsrichtung stellt die Rotation des Glättorgans 47 um 360° um die Austragsöffnung 6 dar (Doppelpfeil 53). Die zweite Bewegungsrichtung steuert den Anstellwinkel des Glättorganes 47 in Bezug auf die Achse der Austragsöffnung 6 (Doppelpfeil 54). Dies ermöglicht auch bei komplexen Bauteilen/Druckobjekten wie z.B. Freiformen eine Positionierung des Glättorgans in der Tangentialebene in Bezug auf jeden beliebigen räumlichen Punkt der zu glättenden Bauteil-Oberfläche.

Dies ist für verschiedene Druckvarianten in FIG. 12 und Fig. 13 dargestellt.

Die Positionierung des Glättorganes 47 bzw. der Glättorgane 47, 47' erfolgt über zwei Motoren 42, 42', die elektronisch synchron mit der Düsenführung angesteuert werden. Um eine unlimitierte Endlos-Rotation um die Achse der Austragsöffnung 6 zu gewährleisten, sind beide Motoren 42, 42' starr mit dem Düsenkörper mechanisch verbunden.

Die Rotation um die Achse der Austragsöffnung 6 (Doppelpfeil 53) wird über ein Ritzel 55 und ein Zahnrad 56 auf einen zylindrisch ausgeformten und konzentrisch gelagerten Rotationskörper 45 übertragen.

Für die Kippbewegung des Glättorgans 47 bzw. der Glättorgane 47, 47' (Doppelpfeil 54) wird mittels eines Ritzels 55' ein weiteres Zahnrad 56' gedreht.Dieses Zahnrad 56' hat an seiner Unterseite eine Kegelverzahnung 46, in die ein Kegelrad 44 eingreift. Die Drehbewegung des Kegelrads 44 wird über ein Gestänge 43 auf das Glättorgan 47 übertragen. Wenn auch ein weiteres Glättorgan 47' (siehe Fig. 13) vorhanden ist, dann wird an diesem Kegelrad 44 ein weiteres Gestänge 43' angelenkt, welches das weitere Glättorgan 47' kippt.

Die Länge L (siehe Fig. 12 und 13) des Glättorgans 47 bzw. der Glättorgane 47, 47' entspricht dabei mindestens der Höhe H einer Druckbahn (Layer), die Längenabmessung L kann aber auch deutlich darüber hinaus gehen und der Höhe mehrerer Druckbahnen entsprechen.

Damit wurde eine mechanische Lösung geschaffen, die eine unlimitierte Rotation des Glättorganes 47 bzw. der Glättorgane 47, 47' um die Achse der Austragsöffnung 6 und die Einstellung jeden beliebigen Anstellwinkels in Bezug auf jeden räumlichen Punkt des zu druckenden Bauteiles/Objektes und gleichzeitig eine kleine, kompakte Bauform für die Anbringung an der Austragsöffnung 6 der Düse ermöglicht.

Wenn für das 3D-Druckverfahren Düsen gemäß Fig. 4 (ohne Druckluft betriebene Düse) bzw. Fig. 5 (mit Druckluft betriebene Düse) zum Einsatz kommen, kann man unerwünschten Rillenstrukturen auch dadurch entgegenwirken, dass man diese Rillen 58 mit der Düse gemäß Fig. 5 nachträglich mit Druckmaterial besprüht. Dies ist in FIG. 14 dargestellt, Druckbeton- bzw. -mörtel wird mittels des bereits an Hand von FIG. 5 detailliert beschriebenen Sprüh- bzw. Spritzkopfes oberflächlich auf ein bereits gedrucktes 3D-Bauteil bzw. -objekt 57 aufgebracht und die Oberfläche damit homogen beschichtet. Dadurch erhält das Bauteil 57 einen vollkommen neuen optischen Eindruck, da die Rillen- bzw. Riefenstruktur, die für das 3D-Druck-Filamentverfahren typisch ist, durch das gleichmäßige Überziehen mit dem Beton- bzw. Mörtelcoating nicht mehr erkennbar ist und die Oberfläche eine gleichmäßige, spritzraue Struktur erhält, die (durch Variation der Beschleunigerkomponente) optional nachträglich auch händisch oder maschinell geglättet bzw. anders strukturiert (Reibstruktur etc.) werden kann.

Insbesondere ist es mit diesem Verfahren auch möglich (siehe Fig. 15), ein an ein 3D-Bauteil bzw. Druckobjekt 57 angepasstes, räumliches oder flächiges, zwei- oder dreidimensionales Bewehrungselement 30 aus Bewehrungs- bzw. Armierungsmaterialien an das bereits gedruckte 3D-Bauteil bzw. -objekt oberflächlich anzulegen bzw. zu fixieren und dann wiederum wie bereits in FIG. 14 beschrieben einzuspritzen und damit das gedruckte Bauteil bzw. Druckobjekt nachträglich zu bewehren und zu verstärken. Unter einem Bewehrungselement sind Bewehrungsstreifen, -gitter, -bänder, -geflechte, -gelege, -stäbe bzw. -fäden aus verschiedenen Materialien wie metallischen, polymeren oder nichtmetallischen (zum Beispiel faserartigen) Werkstoffen zu verstehen.

Für diese beiden beschriebenen Spritzverfahren kann es von Vorteil sein, die Beschleunigerkomponente zu reduzieren oder ganz wegzulassen. Damit erzielt man für den applizierten 3D-Druckbeton bzw. -mörtel längere Verarbeitungs- und Offenzeiten für die oberflächliche Nachbearbeitung des aufgespritzten Betons/Mörtels.

Nach einer weiteren Ausgestaltung, die in Fig. 16-20 dargestellt ist, ist es aber auch möglich, Bewehrungselemente gleich während des ursprünglichen 3D-Drucks einzubinden. Das Austragsorgan an der Düsenspitze des Druckverfahrens ist dabei folgendermaßen ausgeführt:

Der fertig gemischte Beton/Mörtel 14 wird durch die spezielle Geometrie des Austragsorganes (dieses hat die Form einer "Hose" 29) in zwei Stränge 14a, 14b bzw. Kammern aufgeteilt, wobei für jeden Strang 14a, 14b eine Austragsöffnung 6, 6' vorgesehen ist. Durch diese beiden Austragsöffnungen 6, 6' wird der Beton/Mörtel entweder kontinuierlich im Dickstromverfahren gefördert (FIG 16, 17) oder im Falle des Sprühverfahrens (FIG. 18, 19) pneumatisch gefördert. In diesem Fall kommen Düsen entsprechend Fig. 5 zum Einsatz, denen Druckluft über Druckluftleitungen 31 zugeführt wird, sodass der Beton/Mörtel durch Druckluft in Einzelteile "zerrissen" wird.

Dabei ist das Austragungsorgan so konstruiert, dass die beiden Austragsöffnungen 6, 6' zueinander gerichtet sind, sodass die austretenden Mörtelteile kurz vor dem Austritt aus den Austragsöffnungen derartig umgelenkt werden (Austrittswinkel α), dass die beiden Beton-/Mörtelstränge unmittelbar nach dem Austritt aus den Austragsöffnungen wieder zu einem Gesamtstrang 15 vereint werden.

Durch dieses Verfahren kann ein vorher definiert positioniertes Bewehrungselement 30 zielsicher vom Mörtel/Beton beidseitig satt umhüllt werden und übernimmt dadurch im Bauteil die Funktion einer verstärkenden Bewehrung.

Der in den Fig. 16 und 18 dargestellte Austrittswinkel α kann dabei zwischen 0-90° variieren.

Das Bewehrungselement kann flexibel, verformbar und umlenkbar, aber auch starr sein. Es kann sich hierbei um textile oder faserartige Bewehrungselemente, aber auch um Bewehrungen aus metallischen, polymeren oder anderen nichtmetallischen Werkstoffen handeln. Die flexible Verformung des Bewehrungselementes kann z.B. auch durch eine kurzzeitige thermische Behandlung des Bewehrungselementes ermöglicht werden.

Das Bewehrungselement 30 kann während des Auftragsverfahrens automatisiert oder manuell über einen Mechanismus der Düse im Endlosstrang oder in Form von Einzelstreifen/ -gittern/ -bändern/ -geflechten/ -gelegen/ -matten/ -stäben/ -fäden eingebracht werden, sodass dieses genau mittig ausgerichtet ist und vom Beton/Mörtel, der gleichmäßig aus beiden Austragsöffnungen 6 austritt, beidseitig eingebettet wird.

Alternativ kann das Bewehrungselement 30 auch manuell oder automatisch mit z.B. einem Roboter eingelegt und passend positioniert werden.

Durch den schichtenweisen Auftrag des Mörtels beim Auftragsverfahren werden die einzelnen Bewehrungselemente Lage für Lage mit eingebettet bzw. eingespritzt und es entsteht so ein flächig bzw. räumlich vollständig bewehrtes zwei- bzw. dreidimensionales Bauteil.

Die Positionierung des Bewehrungselementes kann dabei in Bezug auf den Mörtelstrang auch variieren: Dieses kann mittig/zentral, dezentral, diagonal, vertikal, horizontal etc. eingebracht werden. Es kann auch dermaßen dimensioniert sein, dass dessen Breite die Breite bzw. Höhe des Mörtelstranges/Layers übertrifft. Dies hat den Zweck, dass immer ein Teil des Bewehrungsstreifens aus der frisch aufgebrachten Mörtellage herausragt, wie dies in den Fig. 16 bis 19 dargestellt ist.

Nach Einbringen der nächsten Lage des Bewehrungsstreifens kommt es so zu einer Überlappung der jeweils nachfolgenden Bewehrungsstreifen, welche wiederum mit der jeweils nächsten Mörtellage zu einem homogenen Bauteil eingebettet bzw. eingespritzt werden. Durch die Überlappung der einzelnen Bewehrungsstreifen und deren späteren mechanischen Fixierung mittels eingebettetem bzw. eingesprühtem/eingespritztem und ausgehärteten Beton/Mörtel kommt es zum Aufbau eines homogenen Bewehrungsnetzes im Inneren des Bauteils, wodurch es zu einer Verstärkung des Bauteiles kommt und über das gesamte Bauteil gleichmäßig erhöhte Zugkräfte aufgenommen werden können.

Alternativ dazu können auch zwei synchron geführte Düsen eingesetzt werden, wie dies in Fig. 20 dargestellt ist. Anstatt eines einzelnen 2-Kammernsprühkopfs entsprechend Fig. 18 und Fig. 19 werden zwei einzelnen Düsen 21, 21' verwendet, welche automatisch derart räumlich geführt werden, dass diese wiederum ein flexibles, verformbares und umlenkbares oder auch starres Bewehrungselement 30 einbetten, indem die räumlich getrennt geführten beiden Düsenköpfe 21, 21' mit identem Aufbau wie in Fig. 5 beschrieben synchron das Bewehrungselement 30 von zwei Seiten einbetten bzw. einsprühen/einspritzen. Damit können Bauteile realisiert werden, die mit Druck-Objekten, die nach dem in Fig. 18 bzw. 19 hergestellten Verfahren produziert wurden, gleichzustellen sind. Die beiden Düsen können z.B. durch zwei synchron geführte Roboter 32, 32' räumlich automatisiert geführt werden.

Mit diesem Verfahren sind auch vorgefertigte, flächige, einfach oder doppelt gekrümmte, starre Bewehrungselemente (z.B. vorgefertigte metallische Bewehrungskörbe bzw. -gitter) einsprüh- bzw. einspritzbar.

Im Folgenden wird auf die Rezepturkomponenten von 3D-Druck-geeigneten Mörteln/Betonen eingegangen, welche die Herstellung optimierter, für den 3D-Druck geeigneter Rezepturen ermöglichen.

Als Ausgangsmaterial für den 3D-Druck gemäß dieser Erfindung kann sowohl ein Trockenmörtel bzw. Trockenbeton als auch ein konventionell hergestellter Beton (Fertigbeton aus Transportbetonwerk oder baustellengemischt) bzw. ein vorgemischter Fertigmörtel (Werkmörtel), der zum Beispiel in einem Transportbeton- oder ähnlichem Mischwerk hergestellt wurde, verwendet werden.

Bevorzugt wird jedoch ein Trockenmörtel bzw. Trockenbeton verwendet.

### A.) TROCKENMÖRTEL/TROCKENBETON-REZEPTUR

### Sande/Zuschlagstoffe/Füllstoffe:

auf Basis Kalkstein, Dolomit oder Quarzsand bzw. Abmischungen davon im Körnungsbereich von 0 bis X mm (X = variables Größtkorn im Bereich von 1 mm bis 16 mm (bevorzugt 0,1-4 mm, besonders bevorzugt 0,1-2 mm)). Darüber hinaus sind alle Sande/Zuschlagstoffe/Füllstoffe geeignet, die auch für Beton- bzw. Mörtelanwendungen geeignet sind.
Einsatzbereich von - bis: 20-80%
Bevorzugt: 50-70%

### Bindemittel:

auf Basis Portlandzement (CEM I bzw. CEM II bzw. CEM III), gemahlenen Schlacken (Hüttensanden), Flugaschen, Tonerdezementen, Sulfoaluminatzementen, Sulfathüttenzementen, Gipsen und Kalkhydraten oder Abmischungen davon.
Einsatzbereich von - bis: 10-80%
Bevorzugt: 30-60%

### Zusatzstoffe:

latent hydraulische mehlfeine puzzolanische Zusatzstoffe wie Mikrosilika, Kieselsäuren, Metakaolin, Zeolithe, Trass, Feinstmehle auf Basis Quarz, Kalkstein etc.
Einsatzbereich von - bis: 0,5-15%
Bevorzugt: 1,5-10%

### Fließmittel:

auf Basis Polycarboxylatether (PCE), Naphtalinsulfonat, Melaminsulfonat, Ligninsulfonat
Einsatzbereich von - bis: 0,05-2%
Bevorzugt: 0,1-0,8%

### Offenzeitverlängerer:

auf Basis Methylcellulosen (MC)
Einsatzbereich von - bis: 0,01-0,5%
Bevorzugt: 0,01-0,1%

### Stabilisatoren/Verdicker/Stellmittel:

auf Basis niedrigviskoser Methylcellulosen, Welan Gum, Diutan Gum, Xanthan Gum, Stärkeether, Pektine, Guarether, Polyvinylalkohol, Silikate.
Einsatzbereich von - bis: 0,01-0,5%
Bevorzugt: 0,01-0,1%

### Redispersionspulver:

auf Basis Vinylacetat-Ethylen, Styrolacrylat, Styrolbutadien, Reinacrylat, sowie Copolymere von VeoVA, VAC/VeoVa, VAC/VeoVA/E, Vinylterpolymere, Vinylacetat-Vinylversatat, Vinylacetat-Vinylchlorid, Vinylacetat-Acryl, VAC/VeoVA/Acryl, VAM/Acryl.

Redispersionspulver wirken in 3D-Druck-Mörteln- bzw. -Betonen einerseits als Klebstoff und verbessern die Verklebung und Anhaftung der einzelnen Druckbahnen, andererseits wirken diese elastifizierend und verbessern die Zugfestigkeit und Schlagzähigkeit des Werkstoffes.
Einsatzbereich von - bis: 0,1-10%
Bevorzugt: 0,5-2,5%

### Entschäumer:

auf Basis Mineralöl, nichtionischen Surfactants, Silikonöl, Polysiloxan, Fettalkoholalkoxylat, Polyglycol, pflanzlicher Ölbasis, hydrophobierten Estern, ethoxylierten Alkoholen
Einsatzbereich von - bis: 0,02-0,5%
Bevorzugt: 0,05-0,2%

### Netz- und Dispergiermittel:

auf Basis Ethylenoxid/Propylenoxid-Copolymere, Polyglycolester, Glykolderivate, modifizierte Polysiloxane, Gemische von Tensiden auf Basis Fettalkoholen (z.B. Fettalkoholpolyethylen-glycolether, Methylestersulfonate, Fettalkoholsulfate etc.), Fettsäureamidoalkylbetain sowie Natrium-Polynaphthylmethansulfonat.
Einsatzbereich von - bis: 0,005-0,2%
Bevorzugt: 0,01-0,1%

### Schwindreduktionsmittel:

auf organischer Basis Glycolverbindungen (Glycole, Glycolether, Neopentylglycol, Dipropylenglycol), Polyoxyalkylene, Alkylether, Monobuthylether, Butoxyethoxyethanol bzw. auf anorganisch mineralischer Basis wie MgO, CaO, Sulfoaluminatzemente.
Einsatzbereich von - bis: 0,1-7%
Bevorzugt: 0,3-5%

### Beschleuniger:

auf Basis Alkalihydroxyde, Alkalicarbonate, Alkalialuminate, Alkalisilikate (z.B. Wassergläser), Alkali- bzw. Erdalkalisalze, insbesondere Alkali- und Erdalkalichloride, Alkali- und Erdalkaliformiate, Alkali- und Erdalkaliflouride und Alkali- und Erdalkalinitride, z.B. Calciumformiat, Calciumacetat, Lithiumcarbonat, Natriumcarbonat, Kaliumkarbonat. Weiters Aluminatverbindungen wie z.B. Tonerdezement (kristallin oder amorph), amorphes Al-Hydroxyd, Al-Sulfat etc. sowie modifizierte Calciumsilikathydrat-Keime etc.
Einsatzbereich von - bis: 0,05-2%
Bevorzugt: 0,1-1%

### Verzögerer:

auf Basis von Hydroxycarbonsäuren wie Weinsäure, Zitronensäure, Apfelsäure oder Wirkstoffe auf Basis Phosphate, Phosphonsäuren, Gluconate, Gluconsäure, Sulfonate, Zucker, Proteine, Aminosäuren und Salze dieser Verbindungen.
Einsatzbereich von - bis: 0,01-0,5%
Bevorzugt: 0,02-0,3%

### Fasern:

auf Basis Polypropylen, Polyethylen, Polyacryl, Polyacrylnitril, Polyamid, Aramid, Polyester, Stahl, alkaliresistentes Glas, Quarz, Kieselsäure, Keramik, Siliciumcarbid, Basalt, Mineralwolle, Wollastonit, Carbon, Zellulose, Baumwolle, Flachs, Hanf, Jute, Bambus.
Einsatzbereich von - bis: 0,05-5%
Bevorzugt: 0,1-3%

### Pigmente:

auf Basis von TiO₂, CaCO₃, Dolomit, Kaolin, Fe-Oxiden und -hydroxiden, ZnO, ZnS, CoAl₂O₄, Cr-Oxide, (Ti, Ni, Sb)O₂, (Co, Ni, Zn)₂ (Ti, Al)O₄, Co (Cr, Al)₂O₄, Carbon Black, Mehle aus gebranntem Ton bzw. Ziegeln, organische Pigmente unterschiedlichster Art
Einsatzbereich von - bis: 0,05-20%
Bevorzugt: 0,1-5%

### B.) FLÜSSIGBESCHLEUNIGER-REZEPTUR

Der an der Düse zugeführte flüssige bzw. pastöse Beschleuniger hat als Wirkstoffbasis Aluminiumsulfat, Alkalialuminate, Alkalialumosulfate, Aluminiumformiat, Tonerdezement (amorphe oder kristalline Tonerdezementphasen), Sulphoaluminatzement, amorphes Aluminiumhydroxid, Aluminiumhydroxysulfat, Alkanolamine, Flusssäure, Carboxysäuren, Phosphorsäuren, Wasserglas, Ethanolamine wie z.B. Diethanolamin (DEA) und Triethanolamin (TEA) bzw. Abmischungen davon.
Einsatzbereich (bezogen auf Trockenmörtel) von - bis: 0,5-10%
Bevorzugt: 1,0-7,0%

### C.) PASTÖSE ZUSATZSTOFFE BZW. ADDITIVE

Die an der Düse zugeführten zusätzlichen Additive bzw. Zusatzstoffe sind auf identer Wirkstoffbasis wie in A.) beschrieben, haben jedoch als Voraussetzung, dass diese flüssig bzw. als Paste oder Slurry vorliegen müssen. Bevorzugt werden Wasser, Lösemittel, Farb- bzw. Pigmentpasten, Luftporenmittel, Fließmittel, Verzögerer, Verdicker, Bindemittel, Füllstoffe, Zuschlagstoffe und Fasern.

### D.) BESCHLEUNIGTER MÖRTEL/BETON

Durch die intensive Vermischung des Trockenmörtels mit der Beschleunigerkomponente im aktiven Mischer der Druckerdüse kommt es zu einer unmittelbaren Reaktion des Beschleunigers mit den Bindemittelkomponenten, welche noch im Bereich des Mischrohrs (1) der Düse zu einer ersten sofortigen Ansteifreaktion führt und unmittelbar nach Austritt aus der Austragsöffnung (6) eine darauf folgende beginnende Erhärtungsreaktion des Betons/Mörtels zur Folge hat.

### Beispiel:

### MÖRTEL:

34% Portlandzement CEM II A-S 42,5 R (Bindemittel)
2% Metakaolin (Zusatzstoff)
0,2% PCE (Fließmittel)
0,04% niedrigviskose MC (Offenzeitverlängerer)
0,02% Stärkeether (Verdicker)
2,0% Vinylacetat-Ethylen (Redispersonspulver)
0,15% Mischung von Fettalkoholalkoxylat und Polysiloxan (Entschäumer)
0,03% Fettalkohol-Polyethylenglycolether (Netz- und Dispergiermittel)
3% Sulfoaluminatquellzement (Schwindreduktionsmittel)
0,5% Calciumformiat (Beschleuniger)
0,03% Zitronensäure (Verzögerer)
ad 100% Kalksteinkörnung und Kalksteinmehl 0-2 mm (etwa 58%)

### FLÜSSIGBESCHLEUNIGER:

5% (bez. auf Trockenmörtelgewicht) Aluminiumsulfatlösung (40%ig)

Angeführtes Rezepturbeispiel führt bei einem Wasser-Trockenmörtelwert von 16% ±1%-Punkte bei einem Anmischen (ohne die flüssige Beschleunigerkomponente) mit einem Standardmörtelmischer zu folgenden Frischmörteleigenschaften:
- Frischmörtel: Ausbreitmaß mit zylindrischer Hülse
   (Geometrie: h = 5 cm, Durchmesser = 3 cm): 9-10 cm
- Abbindezeiten nach Vicat (Konusnadel):
   - Abbindebeginn: 100-300 min
   - Abbindeende: 110-400 min
- Festigkeitsverlauf (40 x 40 x 160 mm Prisma):
   - DF 1 Tag: 5-10 MPa
   - BZF 1 Tag: 1,5-3,5 MPa
   - DF 28 Tage 25-35 MPa
   - BZF 28 Tage: 5-7 MPa

Der an der Düsenspitze austretende beschleunigte Mörtel/Beton hat für das angeführte Beispiel folgendes Eigenschaftsprofil:
- Frischmörtel: Ausbreitmaß mit zylindrischer Hülse
   (Geometrie: h = 5 cm, Durchmesser = 3 cm): nicht messbar (Mörtel "steht" in Hülse, d.h. steife Konsistenz)
- Abbindezeiten:
   - Abbindebeginn: < 2 min
   - Abbindeende: < 10 min
- Festigkeitsverlauf:
   - DF 1 Tag: 6-11 MPa
   - BZF 1 Tag: 2-4 MPa
   - DF 28 Tage: 25-35 MPa
   - BZF 28 Tage: 6-8 MPa

Mit der Düse und der oben angeführten Rezeptur lassen sich höchst präzise Ergebnisse erzielen. Als Qualitätsparameter für die Beurteilung der Präzision von Druckergebnissen (Bauteilen, Druckobjekten) kann die Maßhaltigkeit, Auflösung und Toleranz des 3D-Druckers herangezogen werden.

Die Maßhaltigkeit des Bauteiles/Druckobjektes hängt ab von
- der Auflösung des 3D-Druckerssystems:
   Dies ist die Eigenschaft eines 3D-Druckers sich beim additiven Aufbau des Bauteils/Druckobjektes präzise von einem räumlichen Punkt zum anderen zu bewegen. Definiert ist die Auflösung als die kleinstmögliche räumliche Verschiebung der Düse, diese ist wiederum von der Steuerungssoftware, dem minimalen Verschiebungswinkel der Antriebsmotoren und der Übersetzung auf die beweglichen Elemente abhängig. Grundsätzlich unterscheidet man die Z-Auflösung (Auflösung in Richtung der vertikalen Achse) und die XY-Auflösung (dies ist die kleinste Bewegung, zu der die Düse innerhalb einer einzigen Schicht in der Lage ist). Die Z-Auflösung ist nur eine andere Bezeichnung für die Schichtdicke des Beton- bzw. Mörtelstranges (die Schichtdicke ist die Maßangabe der Höhe horizontal aufeinanderfolgender Materialeinzelschichten bzw. -stränge). Die Z-Auflösung bzw. Schichtdicke ist eine der wesentlichen technischen Merkmale von 3D-Druckern. Die Anzahl der Schichten, die für die Herstellung eines Bauteiles/Druckobjektes erforderlich ist, bestimmt daneben auch die Herstellungszeit des Objektes.
- dem Austrittsdurchmesser der Austragsöffnung, aus dem das 3D-Druckmaterials (Beton bzw. Mörtel) aus der Düse austritt
- der Dosiergenauigkeit des 3D-Druckmaterials
- der Wiederholungsgenauigkeit der Materialplatzierung/des Materialauftrages
- dem Fließ- bzw. Sprühverhalten des 3D-Druckmaterials nach Austritt aus der Düse
- dem Abbinde- und Erhärtungsverhalten des gedruckten 3D-Druckmaterials
- dem Schwind-, Kriech- und thermischen Verhalten des abgebundenen bzw. erhärteten 3D-Druckmaterials

Die Toleranz des 3D-Drucker-Systems ist die maximale Abweichung der definierten Bauteil-/Druckobjekt-Abmessungen in der digitalen Zeichnung von den Abmessungen des fertig gedruckten Bauteiles/Druckobjektes.

Folgende Werte können mit der vorliegenden Erfindung erreicht werden:

### 1.) Z-Auflösung:

- für Dickstromverfahren, Auftragsverfahren gem. Fig. 4:
   min. Schichtdicke 1 mm
   max. Schichtdicke 50 mm
- für Sprühverfahren, Auftragsverfahren gem. Fig. 5:
   min. Schichtdicke 2 mm
   max. Schichtdicke 50 mm

### 2.) Toleranz:

- für Dickstromverfahren, Auftragsverfahren gem. Fig. 4:
   0,5% (entspricht 5 mm/1000 mm)
- für Sprühverfahren, Auftragsverfahren gem. Fig. 5:
   1,0% (entspricht 10 mm/1000 mm)

Für herkömmliche Spritzbetondüsen, z.B. mit Düsen für das Trockenspritzverfahren, kann man hingegen erfahrungsgemäß von folgenden Werten ausgehen:

### 1.) Z-Auflösung:

min. Schichtdicke >50mm

### 2.) Toleranz:

>5,0% (entspricht 50 mm/1000 mm)

Insbesondere die seitliche Begrenzung der gesprühten bzw. gedruckten "Bahnen" ist mit einer herkömmlichen Spritzbetondüse äußerst problematisch, so dass die Düse für präzisen 3D-Druck mit Beton/Mörtel ungeeignet ist. Im Wesentlichen ist dafür der durch die Düsenkonstruktion resultierende undefinierte Sprühstrahl verantwortlich (Seitenränder des Sprühstrahles undefiniert, keine exakte Begrenzung möglich).

### Liste der Bezugszeichen

1 Mischrohr
2 Hauptöffnung
3 Zusatzöffnung
4 Welle
5 Mischelemente
6, 6' Austragsöffnung
7 Wellenlager
8, 8' Anschlusskupplung
9 Motor
10 Ventil
13 3-Wege-Ventil
14 zugeführter Beton/Mörtel
14a, 14b Stränge
15 Beton-/Mörtelstrang
16 Einlass für Druckluft
17 Druckluftkammer
18 Spritzstrahl
21 Düse
22 erster Abschnitt
23 zweiter Abschnitt
24 Mischwerk
25 Einlassöffnung
26 Schlauch
29 Hose
30 Bewehrungselement
31 Druckluftleitungen
32, 32' Roboter
34 Querstäbe
35 Längsstäbe
36 Unterbrecherventil
37 Magnetventil
38 Magnetventil
39 Magnetventil
40 Spülwasser
41 Verschleißhülse
42, 42' Motor
43, 43' Gestänge
44 Kegelrad
45 Rotationskörper
46 Kegelverzahnung
47, 47' Glättorgan
51, 52 Halbschalen
53 Doppelpfeil
54 Doppelpfeil
55, 55' Ritzel
56, 56' Zahnrad
57 Bauteil
58 Rillen

## Patentansprüche

1. 3D-Druckersystem zum Ausbringen von Beton, Mörtel oder dergleichen mit einer Düse (21) mit einer Hauptöffnung (2) für die Zufuhr des Betons, des Mörtels oder dergleichen, mit mindestens einer Zusatzöffnung (3) für die Zufuhr mindestens eines Zusatzstoffes sowie mit einer Austragsöffnung (6) zum Ausbringen des mit dem Zusatzstoff versetzten Betons, Mörtels oder dergleichen, **dadurch gekennzeichnet, dass** zwischen der Zusatzöffnung (3) und der Austragsöffnung (6) ein aktiv angetriebenes Mischwerk (24) mit einem Mischrohr (1) vorgesehen ist und der Innendurchmesser des Mischrohrs (1) 2-8 cm, vorzugsweise 2-6 cm, besonders bevorzugt 2-4 cm beträgt.

2. 3D-Druckersystem nach Anspruch 1, **dadurch gekennzeichnet, dass** in dem Mischrohr (1) ein Mischwerkzeug mit Mischelementen (5), die als Schaufeln, Paddeln, Stäbe oder als ein Schneckengang oder als mehrere Schneckengänge ausgebildet sind, vorgesehen ist.

3. 3D-Druckersystem nach Anspruch 2, **dadurch gekennzeichnet, dass** die Düse einen ersten Abschnitt (22) und einen zweiten geraden Abschnitt (23) aufweist, wobei die Hauptöffnung (2) am Anfang des ersten Abschnitts (22) und die Austragsöffnung (6) am Ende des zweiten Abschnitts (23) vorgesehen ist, dass das Mischwerk (24) eine Welle (4) hat, die koaxial im zweiten Abschnitt (23) angeordnet ist und die Mischelemente (5) trägt, dass die Welle (4) den zweiten Abschnitt (23) gegenüber der Austragsöffnung (6) durchdringt und dass ein Motor (9) außerhalb der Düse (21) zum Antrieb der Welle (4) vorgesehen ist.

4. 3D-Druckersystem nach Anspruch 3, **dadurch gekennzeichnet, dass** das die Welle (4) kurbelwellenartig ausgebildet ist und vorzugsweise mit Mischelementen in Form von Querstäben (34) und/oder Längsstäben (35) versehen ist.

5. 3D-Druckersystem nach Anspruch 3 oder 4, **dadurch gekennzeichnet, dass** der Innenwinkel (β) zwischen dem ersten Abschnitt (22) und dem zweiten Abschnitt (23) stumpf ist, vorzugsweise zumindest 120°.

6. 3D-Druckersystem nach einem der Ansprüche 1 bis 5, **dadurch gekennzeichnet, dass** der Winkel zwischen der Längsachse des Mischrohrs (1) und der Austragsrichtung der Düse maximal 75°, vorzugsweise maximal 30°, stärker bevorzugt maximal 10°, insbesondere etwa 0° beträgt.

7. 3D-Druckersystem nach einem der Ansprüche 1 bis 6, **dadurch gekennzeichnet, dass** zwischen dem Mischwerk (24) und der Austragsöffnung (6) ein Ventil (10), vorzugsweise ein pneumatisch betätigbares Quetschventil, zum kurzfristigen Stoppen des Materialflusses vorgesehen ist.

8. 3D-Druckersystem nach einem der Ansprüche 1 bis 7, **dadurch gekennzeichnet, dass** die Düse (21) einen Einlass (16) für Druckluft zum Ausblasen des Betons, Mörtels oder dergleichen aufweist.

9. 3D-Druckersystem nach einem der Ansprüche 1 bis 8, **dadurch gekennzeichnet, dass** im Bereich der Zusatzöffnung (3) ein 3-Wege-Ventil (13), vorzugsweise ein Nadelventil, vorgesehen ist, welches die Kontaktzone des Zusatzstoffes zum Beton, Mörtel od. dgl. hin unterbrechen kann, und dass über das 3-Wege-Ventil (13) auch ein Spülmittel zuführbar ist.

10. 3D-Druckersystem nach einem der Ansprüche 1 bis 9, **dadurch gekennzeichnet, dass** die Düse zum Zwecke von Reinigungs- und Wartungsarbeiten aus zwei Halbschalen (51, 52) besteht, wobei vorzugsweise innerhalb der beiden Halbschalen (51, 52) eine an der Mischrohrwand anliegende Verschleißhülse (41) platziert ist.

11. 3D-Druckersystem nach einem der Ansprüche 1 bis 10, **dadurch gekennzeichnet, dass** die Düse ein Glättorgan (47) aufweist, das um die Austragsöffnung (6) herum unlimitiert drehbar ist und dessen Anstellwinkel in Bezug auf die Achse der Austragsöffnung (6) verstellbar ist.

12. 3D-Druckersystem nach Anspruch 11, **dadurch gekennzeichnet, dass** in Bezug auf die Austragsöffnung (6) gegenüber dem Glättorgan (47) ein weiteres Glättorgan (47') vorgesehen ist.

13. 3D-Druckersystem nach Anspruch 11 oder 12, **dadurch gekennzeichnet, dass** das Glättorgan (47) und gegebenenfalls auch das weitere Glättorgan (47') im Wesentlichen eben ist und eine Normale auf diese Ebene die Achse der Austragsöffnung (6) schneidet.

14. 3D-Druckersystem nach einem der Ansprüche 1 bis 13, **dadurch gekennzeichnet, dass** die Düse zwei Austragsöffnungen (6, 6') aufweist, die einen Abstand zueinander haben, sodass zwischen die Austragsöffnungen (6, 6') ein Bewehrungselement (30) in Form von Streifen, Gittern, Bändern, Geflechten, Gelegen, Matten, Stäben oder Fäden positioniert und von Beton/Mörtel satt ummantelt werden kann.

15. 3D-Druckersystem nach einem der Ansprüche 1 bis 13, **dadurch gekennzeichnet, dass** eine zweite identische Düse und eine Steuerung, die die beiden Düsen (21, 21') synchron zu beiden Seiten eines Bewehrungselements führt, vorgesehen sind.

16. Verwendung eines 3D-Druckersystems nach einem der Ansprüche 1 bis 15 zur Herstellung von 3D-gedruckten Objekten und Bauteilen auf Basis von Beton, Mörtel oder dergleichen, **dadurch gekennzeichnet, dass** als Zusatzstoff ein Abbindebeschleuniger, vorzugsweise eine Lösung auf Basis von Aluminiumsulfat, durch die Zusatzöffnung (3) zugeführt wird.

17. Verwendung nach Anspruch 16, **dadurch gekennzeichnet, dass** zusätzlich zu dem Abbindebeschleuniger zumindest ein weiterer Zusatzstoff, insbesondere Wasser, Farbpaste, Luftporenmittel, Fließmittel, Verzögerer, Verdicker, Bindemittel, Füllstoffe, Zuschlagstoffe und/oder Fasern, zugeführt wird.

18. Verwendung nach Anspruch 16 oder 17, **dadurch gekennzeichnet, dass** ein Trockenbeton oder ein Trockenmörtel eingesetzt wird, der in räumlicher Nähe zur Düse mit Wasser versetzt und gemischt und der Düse über einen Schlauch zugeführt wird.

19. Verwendung nach einem der Ansprüche 16 bis 18, **dadurch gekennzeichnet, dass** nach dem schichtweisen Aufbringen von Beton, Mörtel oder dergleichen die entstandenen Rillen durch Besprühen mit einer Düse eines 3D-Druckersystems nach Anspruch 8 gefüllt werden, wobei gegebenenfalls auf die gerillte Oberfläche zum Zwecke der Bauteilverstärkung zuvor Bewehrungselemente, insbesondere Bewehrungsgitter, aufgelegt werden.

20. Verwendung nach einem der Ansprüche 16 bis 19, **dadurch gekennzeichnet, dass** ein Bewehrungselement (30) mittels zweier unabhängig voneinander räumlich geführter Düsen (21, 21') durch die Applikation von Beton/Mörtel von zwei Seiten koaxial eingebettet bzw. eingespritzt bzw. eingesprüht wird.

21. Verwendung nach einem der Ansprüche 16 bis 20 eines 3D-Druckersystems nach Anspruch 14, **dadurch gekennzeichnet, dass** durch eine überlappende Positionierung von einzelnen Bewehrungselementen (30) ein homogenes, verstärkendes Bewehrungsnetz im Inneren des Bauteils aufgebaut wird.

## Claims

1. A 3D printer system for dispensing concrete, mortar or the like with a nozzle (21) having a main opening (2) for supplying the concrete, mortar or the like, with at least one additional opening (3) for supplying at least one additive, as well as a discharge opening (6) for discharging the concrete mixed with the additive, mortar or the like, **characterised in that** an actively driven mixing mechanism (24) having a mixing tube (1) is provided between the additional opening (3) and the discharge opening (6), and the internal diameter of the mixing tube (1) is 2 - 8 cm, preferably 2 - 6 cm, most preferably 2 - 4 cm.

2. The 3D printer system according to claim 1, **characterised in that** in the mixing tube (1) a mixing tool having mixing elements (5) is provided which are formed as blades, paddles, rods or as a screw thread or as a plurality of screw threads.

3. The 3D printer system according to claim 2, **characterised in that** the nozzle has a first section (22) and a second straight section (23), wherein the main opening (2) is provided at the beginning of the first section (22) and the discharge opening (6) is provided at the end of the second section (23), **in that** the mixing mechanism (24) has a shaft (4) which is arranged coaxially in the second section (23) and carries the mixing elements (5), **in that** the shaft (4) penetrates the second section (23) opposite to the discharge opening (6), and **in that** a motor (9) is provided outside the nozzle (21) for driving the shaft (4).

4. The 3D printer system according to claim 3, **characterised in that** the shaft (4) is formed like a crankshaft and is preferably provided with mixing elements in the form of transverse rods (34) and/or longitudinal rods (35).

5. The 3D printer system according to claim 3 or 4, **characterised in that** the internal angle (β) between the first section (22) and the second section (23) is obtuse, preferably at least 120°.

6. The 3D printer system according to any of claims 1 to 5, **characterised in that** the angle between the longitudinal axis of the mixing tube (1) and the discharge direction of the nozzle is maximum 75°, preferably maximum 30°, more preferably maximum 10°, in particular about 0°.

7. The 3D printer system according to any of claims 1 to 6, **characterised in that** a valve (10), preferably a pinch valve which can be actuated pneumatically, is provided between the mixing mechanism (24) and the discharge opening (6) for short-term stopping the flow of material.

8. The 3D printer system according to any of claims 1 to 7, **characterised in that** the nozzle (21) includes an inlet (16) for compressed air for blowing out the concrete, mortar or the like.

9. The 3D printer system according to any of claims 1 to 8, **characterised in that** in the region of the additional opening (3) a 3 way valve (13), preferably a needle valve, is provided which can interrupt the contact zone of the additive to the concrete, mortar or the like, and **in that** a flushing fluid can be supplied via the 3 way valve (13), too.

10. The 3D printer system according to any of claims 1 to 9, **characterised in that** the nozzle consists of two half shells (51, 52) for the purpose of cleaning and maintenance work, wherein a wear sleeve (41) resting against the wall of the mixing tube is preferably placed within the two half shells (51, 52).

11. The 3D printer system according to any of claims 1 to 10, **characterised in that** the nozzle includes a smoothing member (47) which can be rotated around the discharge opening (6) without any limit and the pitch of which may be adjusted with respect to the axis of the discharge opening (6).

12. The 3D printer system according to claim 11, **characterised in that** with respect to the discharge opening (6) a further smoothing member (47') is provided opposite to the smoothing member (47).

13. The 3D printer system according to claim 11 or 12, **characterised in that** the smoothing member (47) and, optionally, also the further smoothing member (47') is substantially planar and a normal to this plane intersects the axis of the discharge opening (6).

14. The 3D printer system according to any of claims 1 to 13, **characterised in that** the nozzle includes two discharge openings (6, 6') which are spaced apart from one another such that a reinforcing element (30) in the form of strips, grids, ribbons, braids, laid webs, mats, rods or threads can be positioned between the discharge openings (6, 6') and can be deeply encased by concrete/mortar.

15. 3D printer system according to any of claims 1 to 13, **characterised in that** a second identical nozzle and a controller are provided which guides the two nozzles (21, 21') synchronously to both sides of a reinforcing element.

16. A use of a 3D printer system according to any of claims 1 to 15 for manufacturing of 3D printed objects and components based on concrete, mortar or the like, **characterised in that** a setting accelerator, preferably a solution based on aluminium sulphate, is fed through the additional opening (3) as an additive.

17. The use according to claim 16, **characterised in that,** in addition to the setting accelerator, at least one further additive, in particular water, colour paste, air-entraining agent, superplasticiser, retarder, thickener, binder, filler, aggregates and/or fibres, is fed.

18. The use according to claim 16 or 17, **characterised in that** a dry concrete or a dry mortar is used, which in close proximity to the nozzle is added by and mixed with water and fed to the nozzle via a hose.

19. The use according to any of claims 16 to 18, **characterised in that** after the application of concrete, mortar or the like layer by layer, the resulting grooves are filled by spraying with a nozzle of a 3D printer system according to claim 8, wherein optionally reinforcing elements, in particular reinforcing grids, are previously placed on the grooved surface for the purpose of reinforcing the component.

20. The use according to any of claims 16 to 19, **characterised in that** a reinforcing element (30) is coaxially embedded and injected and sprayed, respectively, by the application of concrete/mortar from two sides by means of two nozzles (21, 21') guided spatially independently from one another.

21. The use according to any of claims 16 to 20 of a 3D printer system according to claim 14, **characterised in that** a homogeneous, reinforcing reinforcement mesh is constructed inside the component by an overlapping positioning of individual reinforcement elements (30).

## Revendications

1. Système d'impression 3D destiné à distribuer du béton, du mortier ou des matières apparentées à l'aide d'un buse (21) comportant un orifice principal (2) lequel permet d'apporter le béton, le mortier ou la matière apparentée, au moins un orifice supplémentaire (3) lequel permet d'apporter au moins un additif ainsi qu'au moins un orifice de sortie (6) lequel permet de distribuer, après l'ajout dudit additif, le béton, le mortier ou la matière apparentée, **caractérisé en ce qu'**un organe mélangeur (24) à entrainement actif comportant un tube mélangeur (1) est disposé entre l'orifice supplémentaire (3) et l'orifice de sortie (6), le diamètre intérieur du tube mélangeur (1) étant compris entre 2 et 8 cm, de préférence entre 2 et 6 cm, avec une préférence particulière entre 2 et 4 cm.

2. Système d'impression 3D selon la revendication 1, **caractérisé en ce qu'**un outil de mélange pourvu d'éléments mélangeurs (5) lesquels sont réalisés sous forme d'aubes, de pales, de tiges ou sous forme d'une vis ou de plusieurs vis, est disposé dans le tube mélangeur (1).

3. Système d'impression 3D selon la revendication 2, **caractérisé en ce que** ladite buse comporte une première partie (22) et une seconde partie (23) droite, l'orifice principal (2) étant disposé au début de la première partie (22) et l'orifice de sortie (6) étant disposé à la fin de la seconde partie (23), que l'organe mélangeur (24) comporte un arbre (4) qui est disposé coaxialement dans la seconde partie (23) et qui porte les éléments mélangeurs (5), que l'arbre (4) pénètre la seconde partie (23) à l'opposé de l'orifice de sortie (6) et qu'un moteur (9) est disposé à l'extérieur de la buse (21) pour entraîner l'arbre (4).

4. Système d'impression 3D, **caractérisé en ce que** l'arbre (4) est réalisé de manière à ressembler à un vilebrequin tout en étant préférentiellement pourvu d'éléments mélangeurs lesquels ont la forme de tiges transversales (34) et/ou tiges longitudinales (35).

5. Système d'impression 3D selon les revendications 3 ou 4, **caractérisé en ce que** l'angle intérieur (β) entre la première partie (22) et la seconde partie (23) est obtus, de préférence supérieur ou égal à 120°.

6. Système d'impression 3D selon l'une des revendications 1 à 5, **caractérisé en ce que** l'angle entre l'axe longitudinal du tube mélangeur (1) est la direction de sortie de la buse est inférieur ou égal à 75°, de préférence inférieur ou égal à 30°, de préférence encore inférieur ou égal à 10°, et notamment égal à environ 0°.

7. Système d'impression 3D selon l'une des revendications 1 à 6, **caractérisé en ce qu'**une vanne (10), s'agissant préférentiellement d'une vanne à manchon pouvant être actionnée de manière pneumatique, est disposée entre l'organe mélangeur (24) et l'orifice de sortie (6) pour arrêter le flux de matière pour une durée limitée.

8. Système d'impression 3D selon l'une des revendications 1 à 7, **caractérisé en ce que** la buse (21) comporte une entrée (16) destiné à de l'air comprimé permettant d'expulser le béton, le mortier ou la matière apparentée.

9. Système d'impression 3D selon l'une des revendications 1 à 8, **caractérisé en ce qu'**une vanne 3 voies (13), s'agissant préférentiellement d'une vanne à pointeau, est disposée au niveau de l'orifice supplémentaire (3) et permet d'interrompre la zone de contact entre ledit additif et le béton, le mortier ou la matière apparentée, et qu'un agent de rinçage peut être également apporté à travers la vanne 3 voies (13).

10. Système d'impression 3D selon l'une des revendications 1 à 9, **caractérisé en ce que** la buse est composée de deux demi-coques (51, 52) en vue de travaux de nettoyage et de maintenance, une gaine d'usure (41) étant préférentiellement mise en place au sein des deux demi-coques (51, 52) sur la paroi du tube mélangeur.

11. Système d'impression 3D selon l'une des revendications 1 à 10, **caractérisé en ce que** la buse comporte un organe de lissage (47) qui peut être tourné librement autour de l'orifice de sortie (6) et dont l'angle d'attaque par rapport à l'axe de l'orifice de sortie (6) est réglable.

12. Système d'impression 3D selon la revendication 11, **caractérisé en ce qu'**il comporte un autre organe de lissage (47') qui est disposé, par rapport à l'orifice de sortie (6), à l'opposé de l'organe de lissage (47).

13. Système d'impression 3D selon les revendications 11 ou 12, **caractérisé en ce que** l'organe de lissage (47) et, le cas échéant, également l'autre organe de lissage (47') sont sensiblement planes, et une normale au plan correspondant forme une intersection avec l'axe de l'orifice de sortie (6).

14. Système d'impression 3D selon l'une des revendications 1 à 13, **caractérisé en ce que** la buse comporte deux orifices de sortie (6, 6') qui sont espacés l'un de l'autre, faisant en sorte qu'un élément d'armature (30), sous forme de rubans, de grillages, de bandes, de treillis, de nappes, de nattes, de tiges ou de fils, puisse être positionné entre les orifices de sortie (6, 6') et entouré à saturation de béton/mortier.

15. Système d'impression 3D selon l'une des revendications 1 à 13, **caractérisé en ce qu'**il comporte une deuxième buse, de type identique, et un organe de commande qui guide les deux buses (21, 21') de manière synchronisée par rapport aux deux côtés d'un élément d'armature.

16. Utilisation d'un système d'impression 3D selon l'une des revendications 1 à 15 pour fabriquer des objets et des éléments de construction imprimés en 3D à base de béton, de mortier ou de matières apparentées, **caractérisée en ce que** l'on apporte, à travers l'orifice supplémentaire (3) en tant qu'additif un accélérateur de prise, s'agissant préférentiellement d'une solution à base de sulfate d'aluminium.

17. Utilisation selon la revendication 16, **caractérisée en ce que,** outre ledit accélérateur de prise, on apporte au moins un autre additif, s'agissant plus particulièrement d'eau, d'un colorant pâteux, d'un agent aérateur, d'un agent fluidifiant, d'un retardateur, d'un épaississant, d'un liant, d'une charge, de granulats et/ou de fibres.

18. Utilisation selon les revendications 16 ou 17, **caractérisée en ce que** l'on met en œuvre un béton sec ou un mortier sec auquel on ajoute, à proximité de ladite buse, de l'eau puis en prépare un mélange que l'on envoie à la buse à travers un tuyau.

19. Utilisation selon l'une des revendications 16 à 18, **caractérisée en ce que,** suite à la mise en place de plusieurs couches successives de béton, de mortier ou d'une matière apparentée, les rainures qui font apparition sont comblées par projection à l'aide d'une buse du système d'impression 3D selon la revendication 8, la surface rainurée étant, le cas échéant, pourvue d'éléments d'armature, s'agissant notamment de grillages d'armature, pour renforcer l'élément de construction.

20. Utilisation selon l'une des revendications 16 à 19, **caractérisée en ce qu'**un élément d'armature (30) est incorporé ou entouré par injection ou projection en appliquant du béton/mortier coaxialement depuis deux côtés au moyen de deux buses (21, 21') qui sont guidées dans l'espace indépendamment l'une de l'autre.

21. Utilisation selon l'une des revendications 16 à 20 d'un système d'impression 3D selon la revendication 14, **caractérisée en ce qu'**un réseau d'armature homogène et renforçant est établi au sein de l'élément de construction en positionnant les différents éléments d'armature (30) de manière à ce qu'ils se chevauchent.
